(19)

Europäisches Patentamt
European Patent Office
Office européen des brevets

(11) **EP 3 496 328 A1**

(12) **EUROPEAN PATENT APPLICATION**
published in accordance with Art. 153(4) EPC

(43) Date of publication:
**12.06.2019 Bulletin 2019/24**

(21) Application number: **17837092.0**

(22) Date of filing: **04.08.2017**

(51) Int Cl.:
**H04L 9/08** (2006.01)  **G06F 21/44** (2013.01)
**G09C 1/00** (2006.01)  **H04L 9/32** (2006.01)

(86) International application number:
**PCT/JP2017/028391**

(87) International publication number:
**WO 2018/025991 (08.02.2018 Gazette 2018/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.08.2016 JP 2016153699**

(71) Applicant: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(54) **COMMUNICATION SYSTEM, COMMUNICATION CLIENT, COMMUNICATION SERVER, COMMUNICATION METHOD, AND PROGRAM**

(57) A technique of encrypted communications is proposed to provide stronger defense against an attack from a third party, in particular, an MITMA than in SSL communications. A client and a server each have the function of generating the same solution under the same conditions. The client generates a first solution (S1002) and transmits the solution to the server (S1003). When receiving the solution, the server generates a solution (S2002) and authenticates the client if the solution agrees with the solution received from the client (S2003). The server encrypts the common key of the server by using a second solution as a key (S2005) and transmits the common key to the client. The client generates a second solution and decrypts the encrypted common key by using the solution as a key (S1007). The server and the client perform encrypted communications with the shared common key in a common key system.

FIG. 8

## Description

## Technical Field

The present invention relates to a communication technique and more specifically relates to a technique for encrypted communications.

## Background Art

For example, in the case of payment to an on-line shop on the Internet and checking of the balance on his/her account or remittance to a third party through Internet banking, a user performs communications between his/her terminal (client) and the server of a shop or the like over the Internet. Naturally, such communications require a high degree of confidentiality and thus techniques for encrypted communications are used.

A so-called SSL (secure sockets layer) technique has been practically used as a technique for encrypted communications. In the present application, SSL surely includes TLS (transport layer security) that is a standardized protocol of SSL.

SSL mainly has two aspects. One aspect is identification (authentication) and the other aspect is encrypted communications. Processing in SSL communications will be discussed below to explain the implementation of the aspects.

In this example, SSL communications are performed between a client and a server.

(1) Preprocessing

a. A server generates a pair of a private key and a public key. As is commonly known, a private key and a public key both can encrypt plaintext data into encrypted data and decrypt data encrypted by the other key into plaintext data. In the server, a server certificate is installed as data that allows the other party to verify the authenticity of the server. The server certificate includes the public key of the server and has a digital signature for indicating the authenticity of the server certificate.

b. The client prepares a common key. As is commonly known, a common key can encrypt plaintext data into encrypted data and decrypt data encrypted by the same common key into plaintext data.

c. A route certificate is installed for the client. The route certificate is created by a route certification authority. The route certification authority creates the server certificate and attaches the digital signature to the server certificate. The client can verify the authenticity of the server certificate according to a combination of the route certificate and the digital signature attached to the server certificate.

(2) Sharing of the common key between the server and the client

a. The client requests SSL communications from the server.

b. The server transmits the server certificate to the client. As described above, the server certificate includes the public key used by the server and is attached with the digital signature.

c. The client verifies the authenticity of the server certificate by using the route certificate of the client and the digital signature attached to the server certificate. If the server certificate is authorized, the client authenticates the server communicating with the client. If the server certificate is unauthorized, the client does not authenticate the server.

d. If the client authenticates the server, the common key of the client is encrypted by the public key included in the server certificate received from the server and is transmitted to the server.

e. The server decrypts the encrypted public key from the client with the private key of the server. Thus, the common key of the client is shared between the client and the server.

(3) Encrypted communications between the server and the client

The server and the client both transmit encrypted data to the other party, the data being encrypted with the common keys of the server and the client. The server and the client both decrypt encrypted data from the other party with the common keys of the server and the client. This enables encrypted communications between the server and the client.

The above-mentioned processing is performed in SSL communications.

Roughly speaking, only encrypted communications between the server and the client in (3) are required in SSL communications. The key point of SSL communications is encrypted communications with a common key. This is because encrypted communications with a common key is considerably lighter processing than encrypted communications with a public key and a private key.

For the encrypted communications, it is necessary to share the common key between the server and the client. In order to implement the encrypted communications, the common key is transmitted from the client to the server by using the public key and the private key of the server, which is the processing of (2) for SSL communications. As described above, in encrypted communications with the public key and the private key, the different keys are used for encryption and decryption. Hence, even if the encrypted common key for the client with the public key is stolen by a malicious third party when being transmitted from the client to the server, the third party does not have the private key and thus the common key of the client is not stolen by the third party. This result is not affected by the publication of the public key.

When the common key is transmitted from the client to the third party, as described above, the public key transmitted from the server to the client is used. In this case, however, the authenticity of the public key and the authenticity of the sender (server) of the public key are significant. This is because a malicious third party or the like may transmit a public key to the client. The authenticity of the public key and the sender is ensured by the processing of (1) and (2) describing SSL communications. The client verifies the authenticity of (authenticates) the server through the processing, thereby ensuring the authenticity of SSL communications.

## Summary of Invention

### Technical Problem

As described above, it seems that a malicious third party cannot enter SSL communications. However, wiretapping by malicious third parties occurs in actual SSL communications. For example, in Internet banking, users frequently become victims of crimes such as unintended transfer of money from a user account to the account of a third party who is a complete stranger to the user.

The causes of such crimes include, for example, tampering of a route certificate for a client by techniques such as hacking or the use of computer viruses. Moreover, route certificates generally have expiration dates but many users do not update their route certificates at their clients. Thus, the route certificates in the clients may be placed into the same state as tampering.

If the route certificate is tampered, a malicious third party creates a fake server certificate such that the authenticity of the third party is verified by a client with the tampered route certificate. When the user requests SSL communications from an authorized server, the third party pretends to be the authorized server and receives the request between the client and the authorized server. Thereafter, the fake server that pretends to be the authorized server transmits the fake server certificate to the client. Thus, the client determines that the fake server certificate is authorized by the tampered route certificate, so that the client authenticates the fake server. This causes the client to encrypt the common key of the client with a fake public key included in the fake server certificate and transmit the common key to the fake server. The fake server that receives the common key decrypts the encrypted common key with a private key paired with the fake public key. This transfers the common key of the client to the malicious third party. Thereafter, even if communications between the client and the server are encrypted with the common key, the malicious third party who has the common key for the encrypted communications can freely decrypt the communications.

Such an attack of a malicious third party between a client and a server is referred to as a man-in-the-middle attack (MITMA) and is not prevented in SSL communications as in other encrypted communications.

In the field of encrypted communications, a sender and a receiver fundamentally have the same key (that is, communications in a common key system) and thus the way to share the same key has been a conventional problem. This problem is referred to as a problem of key distribution, which is not solved also in SSL communications.

As described above, SSL communications are performed in the common key system. One problem is how to safely distribute the common key of a client to a server. As described above, SSL communications aim to safely distribute the common key of a client to the server by using encrypted communications with a private key in the first stage and combining an authentication technique with a server certificate and a route certificate. However, as described above, the aim is not fully accomplished.

The present invention has been devised to propose a technique of encrypted communications with stronger defense against an attack from a third party and in particular, an MITMA than SSL communications.

### Solution to Problem

In order to solve the problem, the present inventors propose the following inventions:

The present invention is a communication method implemented by an encrypted communication system including a first communication device and a second communication device, each being connectable to a predetermined network and including solution generating means capable of successively generating identical solutions under common conditions. Such a communication method may be or may not be an aspect of currently available SSL communications. In other words, such a communication method can be regarded as an advanced method or an improved method of SSL communications or may be regarded as being irrelevant to SSL communications. If the present invention is regarded as an advanced or improved technique of SSL communications, that is, an alternative of SSL, the first communication device serves as a conventional server and the second communication device serves as a conventional client. The network in the present application is typically the Internet.

The present invention includes the following steps.

The present invention includes the steps of performing: causing the second communication device to generate the solution by the solution generating means and transmitting the solution to the first communication device via the network; causing the first communication device to receive the solution from the second communication device via the network; causing the first communication device to generate the solution by the solution generating means, compare the solution generated by the solution generating means of the first communication device and the solution received from the second communication device, and authenticate the second communication device if the solutions agree with each other; causing, if the first communication device authenticates the second communication device, the first communication device to generate the second or subsequent solution by the solution generating means and encrypt the common key of the first communication device by using the second or subsequent solution generated under predetermined conditions or causing the second communication device having received notification about the authentication of the second communication device from the first communication device to generate the second or subsequent solution by the solution generating means and encrypt the common key of the second communication device by using the second or subsequent solution generated under the predetermined conditions; if the first communication device encrypts the common key, transmitting the encrypted common key from the first communication device to the second communication device via the network, and causing the second communication device having received the encrypted common key to generate the second or subsequent solution by the solution generating means and decrypt the encrypted common key by using the second or subsequent solution generated under the predetermined conditions, the common key being decrypted using an algorithm identical to an algorithm for encrypting the common key by the first communication device, if the second communication device encrypts the common key, the encrypted common key from the second communication device to the first communication device via the network, causing the first communication device having received the encrypted common key to generated the second or subsequent solution by the solution generating means, and decrypting the encrypted common key by using the second or subsequent solution generated under the predetermined conditions, the common key being decrypted using an algorithm identical to an algorithm for encrypting the common key by the second communication device; and performing encrypted communications in a common key system between the first communication device and the second communication device by using the common key shared between the first communication device and the second communication device in the above-mentioned steps.

The final step of the present invention, that is, the step of performing encrypted communications in the common key system between the first communication device and the second communication device by using the common key shared between the first communication device and the second communication device in the above-mentioned steps corresponds to the processing of (3) in current SSL communications. In other words, this part of the step can follow the processing of (3) that is currently used in SSL communications. Encrypted communications in the common key system are considerably widespread and thus it is not always necessary to follow the processing of (3).

As has been discussed in Background Art, the way to distribute a common key and the way to authenticate the other party of communications are important in SSL communications. The distribution of the common key and the authentication are important also in other encrypted communications. In the present invention, the distribution and authentication are implemented before "performing encrypted communications in a common key system between the first communication device and the second communication device by using the common key shared between the first communication device and the second communication device in the above-mentioned steps". The mechanism will be specifically discussed below.

The invention features the solution generating means used by the second communication device and the first communication device. The second communication device and the first communication device may use the same solution generating means or different solution generating means. The solution generating means can generate at least successive identical solutions under common conditions. For example, a technique of one-time passwords is applicable to the solution generating means. Some methods are used for one-time passwords. For example, one-time passwords generated by two solution generating means in the same order are compared with each other and are found to be identical or one-time passwords generated by two solution generating means at the same time are compared with each other and are found to be identical. The solution generating means of the invention may be used according to any one of the methods if a technique of one-time passwords is used.

If the same solution is used, the second communication device and the first communication device of the invention can perform encryption and decryption. In this case, the solution substantially acts as a common key in normal encryption and decryption. Typically, the second communication device and the first communication device can perform encryption and decryption by using the same algorithm. The processing of encryption and decryption corresponds to the processing of (2) in current SSL communications and is different from processing of (3) in current SSL communications, that is, encryption and decryption in "performing encrypted communications in the common key system between the first communication device and the second communication device by using the common key shared between the first communication device and the second communication device in the above-mentioned steps".

Specific processing contents performed by the first communication device and the second communication device will be described below.

First, in encrypted communications between the second communication device and the first communication device, the step of causing the second communication device to generate the solution by the solution generating means and transmit the solution to the first communication device via the network is initially performed.

Subsequently, the step of causing the first communication device to receive the solution from the second communication device via the network is performed. Thereafter, authentication is performed in the first communication device. The authentication is specifically performed as follows: The first communication device generates the solution by the solution generating means of the first communication device and compares the solution generated by the solution generating means of the first communication device and the solution received from the second communication device. As a result of comparison, if the solutions agree with each other, the first communication device authenticates the second communication device having transmitted the solution, otherwise the first communication device determines that the second communication device is not authorized. As described above, the solution generating means of the first communication device can successfully generate solutions identical to solutions generated by the second communication device under the common conditions. Thus, the solution generating means of the first communication device can generate the same solution as the solution transmitted from the authorized second communication device, achieving the above-mentioned authentication.

After the first communication device authenticates the second communication device, processing is performed in two ways. Simply speaking, the first communication device first has the common key or the second communication device has the common key. In the former case, the encrypted common key is transmitted from the first communication device to the second communication device so as to be shared between the first communication device and the second communication device. In the latter case, the encrypted common key is transmitted from the second communication device to the first communication device so as to be shared between the first communication device and the second communication device.

Specifically, if the first communication device authenticates the second communication device, the first communication device generates the second or subsequent solution by the solution generating means and encrypts the common key of the first communication device by using the second or subsequent solution generated under predetermined conditions. If the processing is performed, that is, if the first communication device encrypts the common key, the encrypted common key is transmitted from the first communication device to the second communication device via the network, and the second communication device having received the encrypted common key generates the second or subsequent solution by the solution generating means and decrypts the encrypted common key by using the second or subsequent solution generated under the predetermined conditions (for example, the order of generating the solutions in the first communication device used for encrypting the common key is identical to the order of generating the solutions in the second communication device), the common key being decrypted using an algorithm identical to an algorithm for encrypting the common key by the first communication device. As described above, the first communication device and the second communication device each include the solution generating means for successively generating identical common solutions. The first communication device and the second communication device can perform encryption and decryption by using the same algorithm with the solutions. Thus, if the second communication device receives data on the common key encrypted by using one solution in the first communication device, the second communication device can decrypt the encrypted common key by using the solution generated by the second communication device. It is important that the solution used for encryption by the first communication device and the solution used for decryption by the second communication device are not solutions used for authenticating the second communication device but solutions generated by the solution generating means of the first communication device and the second communication device. These solutions are present only in the first communication device or the second communication device and are not transmitted via the network. This substantially prevents a third party from stealing the solutions. In other words, even if a malicious third party steals data on the encrypted common key transmitted on the network, the common key cannot be decrypted. In the present invention, the first communication device and the second communication device can initially determine which one of the generated solutions is to be used for encryption and decryption of the common key after the solution transmitted from the second communication device to the first communication device. For example, the solutions generated in the first and second communication devices may be used next to the solution transmitted from the second communication device to the first communication device or the fifth solution may be used. The solution to be used can be determined in advance between the first and second communication devices. Furthermore, which one of the generated solutions is to be used for the encryption of the common key in the first communication device and the decryption of the common key in the second communication device can be changed depending on the solution transmitted from the second communication device to the first communication device or data transmitted with the solution. Moreover, multiple solutions may be used for encryption by the first communication device and multiple solutions may be used for decryption by the second communication device. In this case, for example, the solutions to be used can be determined in advance as follows: the solutions used for the encryption of the common key by the first communication device can be the first and fourth keys after the solution transmitted from the second communication device to the first communication device and the solutions used for the decryption of the common key by the second communication device can be the first and fourth solutions after the solution transmitted from the second communication device to the first communication device. In other words, it is necessary to share the number of solutions and the order of solutions between the first communication device and the second communication device. This requires the determination of the number of solutions and the order of solutions in advance between the first communication device and the second communication device. If multiple solutions are used for encryption by the first communication device and multiple solutions are used for decryption by the second communication device, it becomes more difficult for a third party to decrypt the encrypted common key.

If the second communication device having received notification about the authentication of the second communication device from the first communication device generates the second or subsequent solution by the solution generating means and encrypts the common key by using the second or subsequent solutions generated under the predetermined conditions, that is, if the second communication device encrypts the common key, the following step can be performed: the encrypted common key is transmitted from the second communication device to the first communication device via the network, the first communication device having received the encrypted common key generates the second or subsequent solution by the solution generating means, and the common key encrypted by using the second or subsequent solution generated under the predetermined conditions is decrypted using an algorithm identical to an algorithm for encrypting the common key by the second communication device. In this case, the solution used for encryption by the second communication device and the solution used for decryption by the first communication device are not solutions used for authenticating the second communication device but solutions generated thereafter by the solution generating means of the first communication device and the second communication device. These solutions are present only in the first communication device or the second communication device and are not transmitted via the network. Also in this case, it is substantially impossible for a third party to steal the solutions.

As described above, the processing is performed in any one of the two ways, so that the common key is shared between the first communication device and the second communication device. Finally, the step of encrypted communications is performed in the common key system with the shared common key between the first communication device and the second communication device. As described above, the step can follow the processing of (3) that is currently used in SSL communications. The encrypted communications are safe as long as the common key is not stolen by a third party.

In the foregoing communication method, it is fundamentally impossible for a malicious third party to intercept communications between the second communication device and the first communication device with MITMA. This is because even if a third party intercepts communications between the second communication device and the first communication device, the third party cannot perform the authentication like the authorized first communication device without the same solution generating means as the second communication device. However, a malicious third party may immediately authenticate the second communication device regardless of whether the transmitted solution is authorized or not. Hence, if the encrypted common key of the second communication device in particular is transmitted from the second communication device to the first communication device, the common key of the second communication device may be stolen by a third party. In order to prevent the steal, when the first communication device having authenticated the second communication device notifies the second communication device of the authentication, the solution generated by the solution generating means of the first communication device can be transmitted to the second communication device concurrently with the notification or at a different time from the notification. In this case, the second communication device receives the solution from the first communication device, the solution is compared with the solution generated by the solution generating means of the second communication device, and the first communication device can be authenticated if the solutions agree with each other. As described above, the solution generating means of the first communication device and the second communication device can successively generate common solutions. Thus, the authorized second communication device can generate the common solution with the authorized first communication device like the authorized first communication device capable of generating the common solution with the authorized second communication device. Since a malicious third part cannot generate a common solution with the second communication device, the second communication device authenticates the first communication device in addition to the authentication of the second communication device by the first communication device. Thus, the probability of successful MITMA is substantially zero.

In this case, the solution transmitted to the second communication device by the first communication device is not used as a solution for encrypting the common key by the first communication device or the second communication device or a solution used for decrypting the encrypted common key. The solution transmitted to the second communication device by the first communication device may be generated before or after the solution used for encrypting the common key by the first communication device or the second communication device or decrypting the encrypted common key. In any case, the solution can be generated after the solution transmitted to the first communication device by the second communication device.

The present invention can be also perceived as a communication method performed by the second communication device. The communication method has the above mentioned effect.

The method is, for example, a communication method implemented by a second communication device of an encrypted communication system including a first communication device and the second communication device, each being connectable to a predetermined network and including solution generating means capable of successively generating identical solutions under common conditions,

The method includes the steps of: the steps being performed by the second communication device, generating the solution by the solution generating means and transmitting the solution to the first communication device via the network; receiving the encrypted common key from the first communication device via the network after the first communication device receives the solution from the second communication device via the network, generates the solution by the solution generating means, compares the solution generated by the solution generating means of the first communication device and the solution received from the second communication device, and authenticates the second communication device if the solutions agree with each other, and the first communication device generates, if the first communication device authenticates the second communication device, the second or subsequent solution by the solution generating means and encrypts the common key of the first communication device by using the second or subsequent solution generated under predetermined conditions; generating the second or subsequent solution by the solution generating means and decrypting the encrypted common key by using the second or subsequent solution generated under the predetermined conditions, the common key being decrypted using an algorithm identical to an algorithm for encrypting the common key by the first communication device; and performing encrypted communications in a common key system with the first communication device by using the common key shared between the first communication device and the second communication device in the above-mentioned steps.

As described above, in the communication method, the solutions generated by the solution generating means of the first communication device may be used by the first communication device in order to perform processing for encrypting the common key of the first communication device, and the solutions generated by the solution generating means of the second communication device may be used by the second communication device in order to perform processing for decrypting the encrypted common key.

If the present invention is perceived as a communication method performed by the second communication device, the communication method can be also perceived as will be described below. The communication method has the above mentioned effect.

The method is, for example, a communication method implemented by a second communication device of an encrypted communication system including a first communication device and the second communication device, each being connectable to a predetermined network and including solution generating means capable of successively generating identical solutions under common conditions.

The method includes the steps of: the steps being performed by the second communication device, generating the solution by the solution generating means and transmitting the solution to the first communication device via the network; receiving notification about authentication of the second communication device from the first communication device via the network if the first communication device authenticates the second communication device, the first communication device receiving the solution from the second communication device via the network, generating the solution by the solution generating means, comparing the solution generated by the solution generating means of the first communication device and the solution received from the second communication device, and authenticating the second communication device if the solutions agree with each other; generating, after receiving the notification, the second or subsequent solution by the solution generating means and encrypting the common key of the second communication device by using the second or subsequent solution generated under the predetermined conditions; transmitting the encrypted common key to the first communication device via the network; and performing encrypted communications in a common key system with the first communication device by using the common key shared between the first communication device and the second communication device by decrypting the common key received by the first communication device from the second communication device, the first communication device generating the second or subsequent solution by the solution generating means and decrypting the encrypted common key by using the second or subsequent solution generated under the predetermined conditions, the common key being decrypted using an algorithm identical to an algorithm for encrypting the common key by the second communication device.

As described above, in the communication method, the multiple solutions generated by the solution generating means of the second communication device may be used by the second communication device when perform processing for encrypting the common key of the second communication device, and the multiple solutions generated by the solution generating means of the first communication device may be used by the first communication device when perform processing for decrypting the encrypted common key.

The present invention can be also perceived as a communication method performed by the first communication device. The communication method has the above mentioned effect.

The method is, for example, a communication method implemented by a first communication device of an encrypted communication system including the first communication device and a second communication device, each being connectable to a predetermined network and including solution generating means capable of successively generating identical solutions under common conditions.

The method includes the steps of: the steps being performed by the first communication device, receiving the solution which was generated by the solution generating means of the second communication device and is transmitted via the network; generating the solution by the solution generating means of the first communication device, comparing the solution generated by the solution generating means of the first communication device and the solution received from the second communication device, and authenticating the second communication device if the solutions agree with each other; generating, if the first communication device authenticates the second communication device, the second or subsequent solution by the solution generating means and encrypting a common key of the first communication device by using the second or subsequent solution generated under predetermined conditions; transmitting the encrypted common key from the first communication device to the second communication device via the network; and performing encrypted communications in a common key system with the second communication device by using the common key shared between the first communication device and the second communication device by decrypting the common key, the second communication device generating, after receiving the encrypted common key, the second or subsequent solution by the solution generating means and decrypting the encrypted common key by using the second or subsequent solution generated under the predetermined conditions, the common key being decrypted using an algorithm identical to an algorithm for encrypting the common key by the first communication device.

As described above, in the communication method, the multiple solutions generated by the solution generating means of the first communication device may be used by the first communication device when perform processing for encrypting the common key of the first communication device, and the multiple solutions generated by the solution generating means of the second communication device may be used by the second communication device when perform processing for decrypting the encrypted common key.

If the present invention is perceived as a communication method performed by the first communication device, the communication method can be also perceived as will be described below. The communication method has the above mentioned effect.

The method is, for example, a communication method implemented by a first communication device of an encrypted communication system including the first communication device and a second communication device, each being connectable to a predetermined network and including solution generating means capable of successively generating identical solutions under common conditions.

The method includes the steps of: the steps being performed by the first communication device, receiving the solution which was generated by the solution generating means of the second communication device and is transmitted via the network; generating the solution by the solution generating means of the first communication device, comparing the solution generated by the solution generating means of the first communication device and the solution received from the second communication device, and authenticating the second communication device if the solutions agree with each other; transmitting notification about authentication of the second communication device to the second communication device via the network if the first communication device authenticates the second communication device; receiving an encrypted common key that is transmitted from the second communication device via the network after the second communication device having received the notification about the authentication of the second communication device from the first communication device generates the second or subsequent solution by the solution generating means and encrypts the common key of the second communication device by using the second or subsequent solution generated under predetermined conditions; generating the second or subsequent solution by the solution generating means and decrypting the encrypted common key received from the second communication device by using the second or subsequent solution generated under the predetermined conditions, the common key being decrypted using an algorithm identical to an algorithm for encrypting the common key by the second communication device; and performing encrypted communications in a common key system with the second communication device by using the common key shared between the first communication device and the second communication device in the above-mentioned steps.

As described above, in the communication method, the multiple solutions generated by the solution generating means of the second communication device may be used by the second communication device when perform processing for encrypting the common key of the second communication device, and the multiple solutions generated by the solution generating means of the first communication device may be used by the first communication device when perform processing for decrypting the encrypted common key.

The present invention can be also perceived as a second communication device that is connectable to a network so as to constitute an encrypted communication system in combination with a first communication device. The second communication device has the above mentioned effect.

The second communication device is, for example, a second communication device connectable to a predetermined network so as to constitute an encrypted communication system in combination with a first communication device connectable to the network, the first communication device including: first communication device solution generating means capable of successively generating solutions, first communication device first encryption/decryption means capable of encryption using the solution generated by the first communication device solution generating means, authentication means, and first communication device second encryption/decryption means capable of encryption and decryption in a common key system with a common key.

The second communication device includes: second communication device solution generating means capable of successively generating solutions identical to solutions generated by the first communication device solution generating means under common conditions; second communication device first encryption/decryption means capable of decryption using the solution generated by the second communication device solution generating means, the decryption being identical to decryption performed by the first communication device first encryption/decryption means if the same solution is used; and second communication device second encryption/decryption means capable of encryption and decryption in the common key system with the common key.

The second communication device transmits the solution generated by the second communication device solution generating means to the first communication device via the network, the first communication device receives the solution from the second communication device via the network, generates the solution by means of the first communication device solution generating means, compares the solution generated by the first communication device solution generating means and the solution received from the second communication device, and authenticates the second communication device by means of the authentication unit if the solutions agree with each other, the first communication device solution generating means generates, if the authentication unit authenticates the second communication device, the second or subsequent solution, the first communication device encrypts the common key of the first communication device by means of the first communication device first encryption/decryption means by using the second or subsequent solution generated by the first communication device solution generating means under predetermined conditions, and the first communication device transmits the encrypted common key to the second communication device via the network, the second communication device generates the second or subsequent solution by means of the second communication device solution generating means and decrypts the encrypted common key from the first communication device by means of the second communication device first encryption/decryption means by using the second or subsequent solution generated by the second communication device solution generating means under the predetermined conditions, and by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the first communication device in the common key system.

If the present invention is perceived as a second communication device that is connectable to a network so as to constitute an encrypted communication system in combination with a first communication device, the second communication device can be perceived as will be discussed below. The second communication device has the above mentioned effect.

The second communication device is, for example, a second communication device connectable to a predetermined network so as to constitute an encrypted communication system in combination with a first communication device connectable to the network, the first communication device including: first communication device solution generating means capable of successively generating solutions, first communication device first encryption/decryption means capable of decryption using the solution generated by the first communication device solution generating means, authentication means, and first communication device second encryption/decryption means capable of encryption and decryption in a common key system with a common key.

The second communication device includes: second communication device solution generating means capable of successively generating solutions identical to solutions generated by the first communication device solution generating means under common conditions; second communication device first encryption/decryption means capable of encryption using the solution generated by the second communication device solution generating means, the encryption being identical to encryption performed by the first communication device first encryption/decryption means if the same solution is used; and second communication device second encryption/decryption means capable of encryption and decryption in the common key system with the common key.

The second communication device transmits the solution generated by the second communication device solution generating means to the first communication device via the network, the first communication device receives the solution from the second communication device via the network, generates the solution by means of the first communication device solution generating means, compares the solution generated by the first communication device solution generating means and the solution received from the second communication device, and authenticates the second communication device by means of the authentication unit if the solutions agree with each other, and transmits notification about the authentication of the second communication device to the second communication device via the network if the authentication means authenticates the second communication device, the second communication device solution generating means of the second communication device having received the notification from the first communication device generates the second or subsequent solution, encrypts the common key of the second communication device by means of the second communication device first encryption/decryption means by using the second or subsequent solution generated under the predetermined conditions, and transmits the encrypted common key to the first communication device via the network, the first communication device generates the second or subsequent solution by means of the first communication device solution generating means and decrypts the encrypted common key received from the second communication device by means of the first communication device first encryption/decryption means by using the second or subsequent solution generated by the first communication device solution generating means under the predetermined conditions, and by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the first communication device in the common key system.

The present invention can be also perceived as a first communication device that is connectable to a network so as to constitute an encrypted communication system in combination with a second communication device. The first communication device has the above mentioned effect.

The first communication device is, for example, a first communication device connectable to a predetermined network so as to constitute an encrypted communication system in combination with a second communication device connectable to the network, the second communication device including: second communication device solution generating means capable of successively generating solutions, second communication device first encryption/decryption means capable of decryption using the solution generated by the second communication device solution generating means, and second communication device second encryption/decryption means capable of encryption and decryption in a common key system with a common key, the second communication device transmitting the solution generated by the second communication device solution generating means to the first communication device via the network.

The first communication device includes: first communication device solution generating means capable of successively generating solutions identical to solutions generated by the second communication device solution generating means under common conditions; first communication device first encryption/decryption means capable of encryption using the solution generated by the first communication device solution generating means, the encryption being identical to encryption performed by the second communication device first encryption/decryption means if the same solution is used; first communication device second encryption/decryption means capable of encryption and decryption in the common key system with the common key; and authentication means configured to compare the solution generated by the first communication device solution generating means and the solution received from the second communication device and authenticate the second communication device if the solutions agree with each other.

The first communication device generates the second or subsequent solution by means of the first communication device solution generating means if the authentication means authenticates the second communication device, encrypts the common key of the first communication device by means of the first communication device first encryption/decryption means by using the second or subsequent solution generated by the first communication device solution generating means under the predetermined conditions, and transmits the encrypted common key to the second communication device via the network, the second communication device generates the second or subsequent solution by means of the second communication device solution generating means and decrypts the encrypted common key received from the first communication device by means of the second communication device first encryption/decryption means by using the second or subsequent solution generated by the second communication device solution generating means under the predetermined conditions, and by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the second communication device in the common key system.

If the present invention is perceived as a first communication device that is connectable to a network so as to constitute an encrypted communication system in combination with a second communication device, the first communication device can be perceived as will be discussed below. The first communication device has the above mentioned effect.

The first communication device is, for example, a first communication device connectable to a predetermined network so as to constitute an encrypted communication system in combination with a second communication device connectable to the network, the second communication device including: second communication device solution generating means capable of successively generating solutions, second communication device first encryption/decryption means capable of encryption using the solution generated by the second communication device solution generating means, and second communication device second encryption/decryption means capable of encryption and decryption in a common key system with a common key, the second communication device transmitting the solution generated by the second communication device solution generating means to the first communication device via the network.

The first communication device includes: first communication device solution generating means capable of successively generating solutions identical to solutions generated by the second communication device solution generating means under common conditions; first communication device first encryption/decryption means capable of decryption using the solution generated by the first communication device solution generating means, the decryption being identical to decryption performed by the second communication device first encryption/decryption means if the same solution is used; first communication device second encryption/decryption means capable of encryption and decryption in the common key system with the common key; and authentication means configured to compare the solution generated by the first communication device solution generating means and the solution received from the second communication device and authenticate the second communication device if the solutions agree with each other.

The first communication device transmits notification about authentication of the second communication device to the second communication device via the network if the authentication unit authenticates the second communication device, the second communication device generates, when receiving the notification from the first communication device, generates the second or subsequent solution by means of the second communication device solution generating means, encrypts the common key of the second communication device by means of the second communication device first encryption/decryption means by using the second or subsequent solution generated under the predetermined conditions, and transmits the encrypted common key to the first communication device via the network, the first communication device generates the second or subsequent solution by means of the first communication device solution generating means and decrypts the encrypted common key received from the second communication device by means of the first communication device first encryption/decryption means by using the second or subsequent solution generated by the first communication device solution generating means under the predetermined conditions, and by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the second communication device in the common key system.

The present invention can be also perceived as a computer program for enabling a general purpose computer to act as the second communication device of the present invention. The computer program has the above mentioned effect.

The computer program is, for example, a computer program for enabling a computer to act as a second communication device of an encrypted communication system including a first communication device and the second communication device, each being connectable to a predetermined network and including solution generating means capable of successively generating identical solutions under common conditions.

The computer program enables the computer to perform the steps of:
generating the solution by the solution generating means and transmitting the solution to the first communication device via the network; receiving the encrypted common key from the first communication device via the network after the first communication device receives the solution from the second communication device via the network, generates the solution by the solution generating means, compares the solution generated by the solution generating means of the first communication device and the solution received from the second communication device, and authenticates the second communication device if the solutions agree with each other, and the first communication device generates, if the first communication device authenticates the second communication device, the second or subsequent solution by the solution generating means and encrypts the common key of the first communication device by using the second or subsequent solution generated under predetermined conditions; generating the second or subsequent solution by the solution generating means and decrypting the encrypted common key by using the second or subsequent solution generated under the predetermined conditions; and performing encrypted communications in a common key system with the first communication device by using the common key shared between the first communication device and the second communication device in the above-mentioned steps.

If the present invention is perceived as a computer program for enabling a general purpose computer to act as the second communication device of the present invention, the computer program can be perceived as will be discussed below. The computer program has the above mentioned effect.

The computer program is, for example, a computer program for enabling a computer to act as a second communication device of an encrypted communication system including a first communication device and the second communication device, each being connectable to a predetermined network and including solution generating means capable of successively generating identical solutions under common conditions.

The computer program enables the computer to perform the steps of:

generating the solution by the solution generating means and transmitting the solution to the first communication device via the network; receiving notification about authentication of the second communication device from the first communication device via the network if the first communication device receives the solution from the second communication device via the network, generates the solution by the solution generating means, compares the solution generated by the solution generating means of the first communication device and the solution received from the second communication device, and authenticates the second communication device if the solutions agree with each other; generating, after receiving the notification, the second or subsequent solution by the solution generating means and encrypting the common key of the second communication device by using the second or subsequent solution generated under predetermined conditions; transmitting the encrypted common key to the first communication device via the network; and performing encrypted communications in a common key system with the first communication device by using the common key shared between the first communication device and the second communication device, the first communication device generating the second or subsequent solution by the solution generating means and decrypting the encrypted common key by using the second or subsequent solution generated under the predetermined conditions, the encrypted common key being received by the first communication device from the second communication device.

The present invention can be also perceived as a computer program for enabling a general purpose computer to act as the first communication device of the present invention. The computer program has the above mentioned effect.

The computer program is, for example, a computer program for enabling a computer to act as a first communication device of an encrypted communication system including the first communication device and a second communication device, each being connectable to a predetermined network and including solution generating means capable of successively generating identical solutions under common conditions.

The computer program enables the computer to perform the steps of:

receiving the solution which was generated by the solution generating means of the second communication device and is transmitted via the network; generating the solution by the solution generating means of the first communication device, comparing the solution generated by the solution generating means of the first communication device and the solution received from the second communication device, and authenticating the second communication device if the solutions agree with each other; generating, if the first communication device authenticates the second communication device, the second or subsequent solution by the solution generating means and encrypting the common key of the first communication device by using the second or subsequent solution generated under predetermined conditions; transmitting the encrypted common key from the first communication device to the second communication device via the network; and performing encrypted communications in a common key system with the second communication device by using the common key shared between the first communication device and the second communication device, the second communication device generating, after receiving the encrypted common key, the second or subsequent solution by the solution generating means and decrypting the encrypted common key by using the second or subsequent solution generated under the predetermined conditions.

If the present invention is perceived as a computer program for enabling a general purpose computer to act as the first communication device of the present invention, the computer program can be perceived as will be discussed below. The computer program has the above mentioned effect.

The computer program is, for example, a computer program for enabling a computer to act as a first communication device of an encrypted communication system including the first communication device and a second communication device, each being connectable to a predetermined network and including solution generating means capable of successively generating identical solutions under common conditions.

The computer program enables the computer to perform the steps of:

receiving the solution which was generated by the solution generating means of the second communication device and is transmitted via the network; generating the solution by the solution generating means of the first communication device, comparing the solution generated by the solution generating means of the first communication device and the solution received from the second communication device, and authenticating the second communication device if the solutions agree with each other; transmitting notification about authentication of the second communication device to the second communication device via the network if the first communication device authenticates the second communication device; receiving the encrypted common key transmitted from the second communication device via the network, after the second communication device having received the notification about the authentication of the second communication device from the first communication device generates the second or subsequent solution by the solution generating means and encrypts the common key of the second communication device by using the second or subsequent solution generated under predetermined conditions; generating the second or subsequent solution by the solution generating means and decrypting, after receiving the encrypted common key, the common key by using the second or subsequent solution generated under the predetermined conditions; and performing encrypted communications in a common key system with the second communication device by using the common key shared between the first communication device and the second communication device in the above-mentioned steps.

According to the computer program for enabling a computer to act as the second communication device of the present invention, on the computer constituting the second communication device, encryption and decryption in encrypted communications in the common key system may be performed between a TCP/IP and a predetermined application for handling plaintext data to be encrypted on the computer, and a plain text to be encrypted and transmitted to the first communication device may be generated by the application and may be transmitted to the TCP/IP, and encrypted data from the first communication device may be transmitted from the TCP/IP and may be decrypted into a plain text to be transmitted to the application.

A computer program in current SSL communications performs encryption and decryption between an application and TCP/IP. The above-mentioned computer program can easily substitute for a computer program for current SSL communications.

According to the computer program for enabling a computer to act as the first communication device of the present invention, on the computer constituting the first communication device, encryption and decryption in encrypted communications in the common key system may be performed between a TCP/IP and a predetermined application for handling plaintext data to be encrypted on the computer, and a plain text to be encrypted and transmitted to the second communication device may be generated by the application and may be transmitted to the TCP/IP, and encrypted data from the second communication device may be transmitted from the TCP/IP and may be decrypted into a plain text to be transmitted to the application.

Thus, the computer program of the present invention can easily substitute for a computer program for current SSL communications.

Another aspect of the present application will be described below. In the foregoing inventions, the solution is transmitted from the second communication device to the first communication device to initially authenticate the second communication device in the first communication device based on the solution transmitted from the second communication device to the first communication device. Thereafter, the common key of one of the first communication device and the second communication device is encrypted, is transmitted to the other device, and then is decrypted therein, so that the common key is shared between the first communication device and the second communication device.

Alternatively, the solution and the encrypted key may be transmitted from the second communication device to the first communication device before the authentication by the first communication device. Such inventions to be referred to as a third aspect of the present application will be discussed below.

A method implemented by the second communication device will be described as an invention to be referred to as the third aspect.

The method is, for example, a communication method implemented by a second communication device of an encrypted communication system including a first communication device and the second communication device, each being connectable to a predetermined network and including solution generating means capable of successively generating identical solutions under common conditions.

The method implemented by the second communication device includes the steps of: generating the solutions by the solution generating means and transmitting one of the solutions and the common key of the second communication device to the first communication device via the network after encrypting the common key by using another one of the solutions; and performing encrypted communications in a common key system with the first communication device by using the common key shared between the first communication device and the second communication device, the first communication device receiving the solution from the second communication device via the network, generating the solutions by the solution generating means, comparing, with the solution received from the second communication device, the solution generated by the solution generating means of the first communication device under the common conditions with the solution generated by the solution generating means of the second communication device and transmitted from the second communication device, authenticating the second communication device if the solutions agree with each other, and decrypting the encrypted common key received by the first communication device from the second communication device, the common key being decrypted using the solution generated by the solution generating means of the first communication device under the common conditions with the solution generated by the solution generating means of the second communication device and used for encrypting the common key to be transmitted from the second communication device, the common key being decrypted using an algorithm identical to an algorithm for encrypting the common key by the second communication device.

A method implemented by the first communication device will be described as an invention to be referred to as the third aspect.

The method is, for example, a communication method implemented by a first communication device of an encrypted communication system including a first communication device and the second communication device, each being connectable to a predetermined network and including solution generating means capable of successively generating identical solutions under common conditions.

The method implemented by the first communication device includes the steps of: receiving one of the solutions generated by the solution generating means of the second communication device and a common key encrypted by using another one of the solutions which was generated by the solution generating means of the second communication device if the one of the solutions and the common key are transmitted via the network; generating the solutions by the solution generating means of the first communication device, comparing the solution received from the second communication device and the solution generated by the solution generating means of the first communication device under the common conditions with the solution generated by the solution generating means of the second communication device and transmitted from the second communication device, and authenticating the second communication device if the solutions agree with each other; decrypting the encrypted common key from the second communication device by using the solution generated by the solution generating means of the first communication device under the common conditions with the solution generated by the solution generating means of the second communication device and used for encrypting the common key to be transmitted from the second communication device, the common key being decrypted using an algorithm identical to an algorithm for encrypting the common key by the second communication device; and performing encrypted communications in a common key system with the second communication device by using the common key shared between the first communication device and the second communication device in the above-mentioned steps.

A second communication device will be described as an invention to be referred to as the third aspect.

The second communication device is, for example, a second communication device connectable to a predetermined network so as to constitute an encrypted communication system in combination with a first communication device connectable to the network, the first communication device including: first communication device solution generating means capable of successively generating solutions, first communication device first encryption/decryption means capable of encryption and decryption using the solution generated by the first communication device solution generating means, authentication means, and first communication device second encryption/decryption means capable of encryption and decryption in a common key system with a common key, the second communication device including: second communication device solution generating means capable of successively generating solutions identical to solutions generated by the first communication device solution generating means under common conditions; second communication device first encryption/decryption means capable of encryption and decryption using the solution generated by the second communication device solution generating means, the encryption and decryption being identical to encryption and decryption performed by the first communication device first encryption/decryption means if the same solution is used; and second communication device second encryption/decryption means capable of encryption and decryption in the common key system using the common key.

The second communication device transmits one of the solutions generated by the second communication device solution generating means and the common key encrypted by using another one of the solutions generated by the second communication device solution generating means, to the first communication device via the network, the first communication device receives the solution and the encrypted common key from the second communication device via the network, generates the solutions by means of the first communication device solution generating means, compares, with the solution received from the second communication device, the solution generated by the first communication device solution generating means under the common conditions with the solution generated by the second communication device solution generating means and transmitted from the second communication device, authenticates the second communication device by means of the authentication unit if the solutions agree with each other, and decrypts the encrypted common key received from the second communication device by means of the first communication device first encryption/decryption means, the common key being decrypted using the solution generated by the first communication device solution generating means under the common conditions with the solution generated by the solution generating means of the second communication device and used for encrypting the common key to be transmitted from the second communication device, and by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications in the common key system with the first communication device.

A method implemented by the first communication device will be described as an invention to be referred to as the third aspect.

The first communication device is, for example, a first communication device connectable to a predetermined network so as to constitute an encrypted communication system in combination with a second communication device connectable to the network, the second communication device including: second communication device solution generating means capable of successively generating solutions, second communication device first encryption/decryption means capable of encryption and decryption using the solution generated by the second communication device solution generating means, and second communication device second encryption/decryption means capable of encryption and decryption in a common key system with a common key, the second communication device transmitting the solution generated by the second communication device solution generating means to the first communication device via the network, the first communication device including: first communication device solution generating means capable of successively generating solutions identical to solutions generated by the second communication device solution generating means under common conditions; first communication device first encryption/decryption means capable of encryption and decryption using the solution generated by the first communication device solution generating means, the encryption and decryption being identical to encryption and decryption performed by the second communication device first encryption/decryption means if the same solution is used; first communication device second encryption/decryption means capable of encryption and decryption in the common key system with the common key; and authentication means configured to compare the solution generated by the first communication device solution generating means and the solution received from the second communication device and authenticate the second communication device if the solutions agree with each other.

If the second communication device transmits, to the first communication device via the network, one of the solutions generated by the second communication device solution generating means and the common key encrypted by using another one of the solutions generated by the second communication device solution generating means, the first communication device receives the solution and the encrypted common key, generates the solutions by means of the first communication device solution generating means, compares, with the solution received from the second communication device, the solution generated by the first communication device solution generating means under the common conditions with the solution generated by the second communication device solution generating means and transmitted from the second communication device, authenticates the second communication device by means of the authentication unit if the solutions agree with each other, and decrypts the encrypted common key from the second communication device by means of the first communication device first encryption/decryption means, the common key being decrypted using the solution generated by the first communication device solution generating means under the common conditions with the solution generated by the second communication device solution generating means and used for encrypting the common key to be transmitted from the second communication device, and by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications in the common key system with the second communication device.

A computer program for enabling a general purpose computer to act as a second communication device is proposed as an invention to be referred to as the third aspect.

The computer program is, for example, a computer program for enabling a computer to act as the second communication device of an encrypted communication system including a first communication device and the second communication device, each being connectable to a predetermined network and including solution generating means capable of successively generating identical solutions under common conditions.

The computer program enables the computer to perform the steps of: generating the solutions by the solution generating means and transmitting one of the solutions and the common key of the second communication device to the first communication device via the network after encrypting the common key by using another one of the solutions; and performing encrypted communications in a common key system with the first communication device by using the common key shared between the first communication device and the second communication device, the first communication device receiving the solution from the second communication device via the network, generating the solutions by the solution generating means, comparing, with the solution received from the second communication device, the solution generated by the solution generating means of the first communication device under the common conditions with the solution generated by the solution generating means of the second communication device and transmitted from the second communication device, authenticating the second communication device if the solutions agree with each other, and decrypting the encrypted common key received by the first communication device from the second communication device, the common key being decrypted using the solution generated by the solution generating means of the first communication device under the common conditions with the solution generated by the solution generating means of the second communication device and used for encrypting the common key to be transmitted from the second communication device, the common key being decrypted using an algorithm identical to an algorithm for encrypting the common key by the second communication device.

A computer program for enabling a general purpose computer to act as a first communication device is proposed as an invention to be referred to as the third aspect.

The computer program is, for example, a computer program for enabling a computer to act as the first communication device of an encrypted communication system including a first communication device and the second communication device, each being connectable to a predetermined network and including solution generating means capable of successively generating identical solutions under common conditions.

The computer program enables the computer to perform the steps of: receiving one of the solutions generated by the solution generating means of the second communication device and a common key encrypted by using another one of the solutions which was generated by the solution generating means of the second communication device if the one of the solutions and the common key are transmitted via the network; generating the solutions by the solution generating means of the first communication device, comparing the solution received from the second communication device and the solution generated by the solution generating means of the first communication device under the common conditions with the solution generated by the solution generating means of the second communication device and transmitted from the second communication device, and authenticating the second communication device if the solutions agree with each other; decrypting the encrypted common key received from the second communication device by using the solution generated by the solution generating means of the first communication device under the common conditions with the solution generated by the solution generating means of the second communication device and used for encrypting the common key to be transmitted from the second communication device, the common key being decrypted using an algorithm identical to an algorithm for encrypting the common key by the second communication device, the common key being decrypted using an algorithm identical to an algorithm for encrypting the common key by the second communication device; and performing encrypted communications in a common key system with the second communication device by using the common key shared between the first communication device and the second communication device in the above-mentioned steps.

**Brief Description of Drawings**

Fig. 1 shows the overall configuration of a communication system according to a first embodiment;
Fig. 2 shows the external appearance of a client included in the communication system shown in Fig. 1;
Fig. 3 shows the hardware configuration of the client included in the communication system shown in Fig. 1;
Fig. 4 is a block diagram showing functional blocks generated in the client included in the communication system shown in Fig. 1;
Fig. 5 is a block diagram showing functional blocks generated in an encryption/decryption unit shown in Fig. 4;

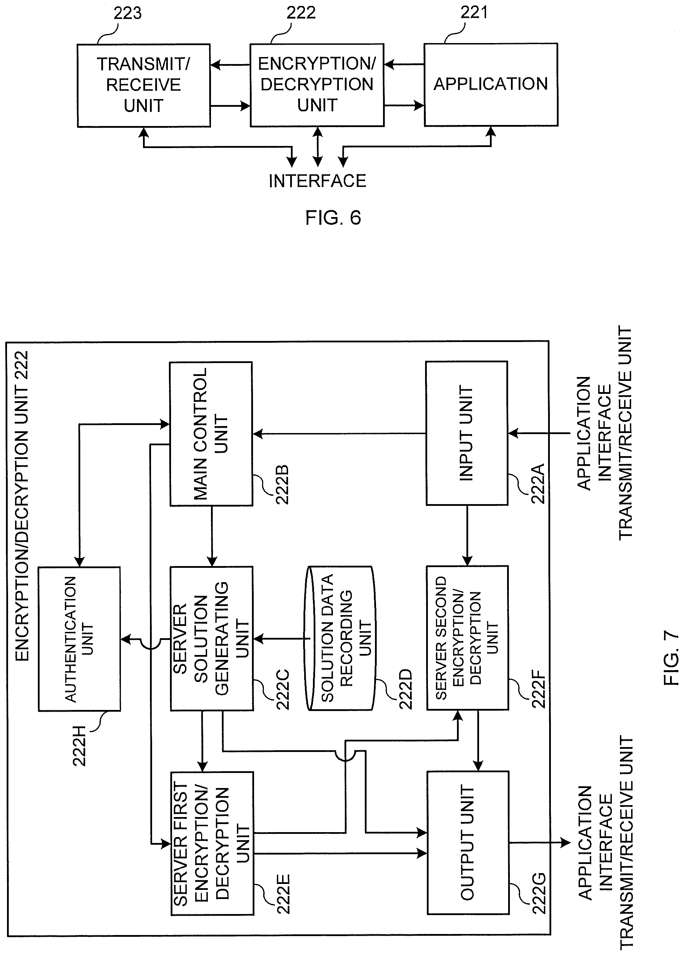

Fig. 6 is a block diagram showing functional blocks generated in a server included in the communication system shown in Fig. 1;
Fig. 7 is a block diagram showing functional blocks generated in the encryption/decryption unit shown in Fig. 6;
Fig. 8 shows a processing flow of communications in the communication system shown in Fig. 1;
Fig. 9 shows functional blocks generated in the encryption/decryption unit of the client according to a first modification;
Fig. 10 shows a processing flow of communications in the communication system according to the first modification;
Fig. 11 shows functional blocks generated in the encryption/decryption unit of a client according to a second embodiment;
Fig. 12 shows functional blocks generated in the encryption/decryption unit of a server according to the second embodiment;
Fig. 13 shows a processing flow of communications in a communication system according to the second embodiment; and
Fig. 14 shows a processing flow of communications in a communication system according to a third embodiment.

**Description of Embodiments**

First to third embodiments according to the present invention will be described below. The same elements in the embodiments and modifications are indicated by the same reference numerals and the redundant explanation is optionally omitted.

<<First Embodiment>>

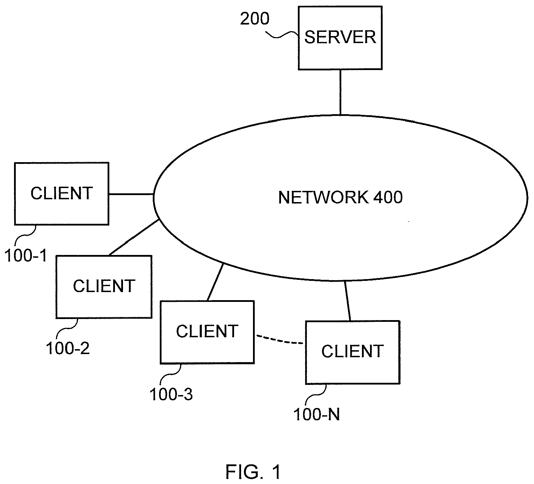

Fig. 1 is a schematic diagram showing the overall configuration of a communication system according to a first embodiment.
The communication system includes a plurality of clients 100-1 to 100-N (hereinafter may be simply referred to as "client 100") and a server 200. The clients and the server are all connectable to a network 400.
The network 400 is the Internet in the present embodiment but is not limited thereto.
The client 100 in the present embodiment corresponds to a second communication device of the present application. The server 200 in the present embodiment corresponds to a second communication device of the present application. It is not always necessary that the server 200 and the client 100 as the first communication device and the second communication device in the present application have a so-called server-client relationship. The server 200 and the client 100 may be two communication devices equivalent to each other.

The client 100 corresponds to a client in the present application and includes a computer. More specifically, the client 100 in the present embodiment includes a general purpose computer.

The configuration of the client 100 will be described below. The clients 100-1 to 100-N are identical in configuration in association with the present invention.

The client 100 is, for example, a mobile phone, a smartphone, a tablet, a laptop computer, or a desktop computer. The clients can communicate with one another via the network 400. It is necessary to generate a functional block, which will be discussed later, in each of the clients by installing a computer program that will be discussed later, and execute processing as will be discussed later. Other specifications are negligible as long as the functional block and the processing are implemented.

For example, if the client 100 is a smartphone or a tablet, a smartphone acting as the client 100 may be an iPhone manufactured and sold by Apple Japan, Inc. and a tablet acting as the client 100 may be an iPad manufactured and sold by Apple Japan, Inc. The client 100 is not limited to a smartphone or a tablet. Hereinafter the client 100 is a smartphone.

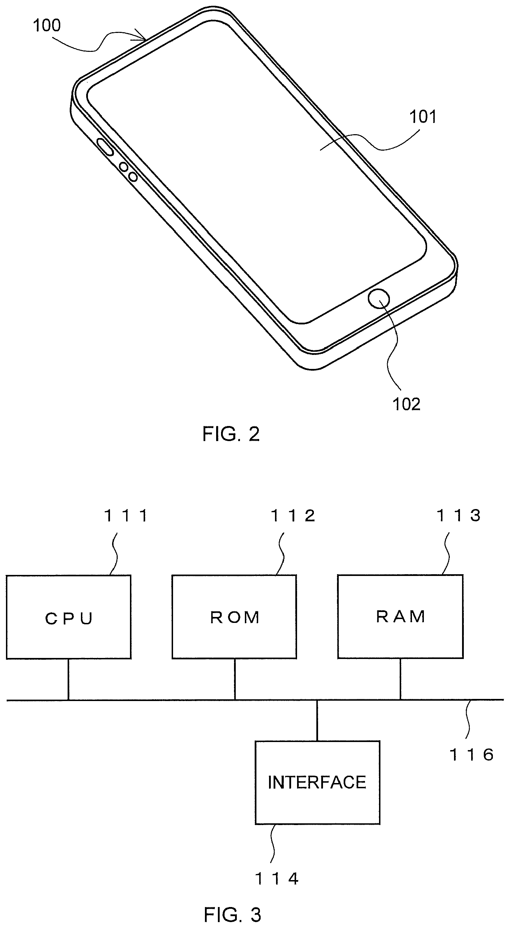

Fig. 2 shows an example of the external appearance of the client 100.

The client 100 has a display 101. The display 101 is provided to display a static image or a moving image and can be a publicly or widely known display. The display 101 is, for example, a liquid crystal display. The client 100 further includes an input device 102. The input device 102 is provided to enable a desired input of a user to the client 100. The input device 102 can be a publicly or widely known input device. The input device 102 of the client 100 in the present embodiment is a button type but is not limited thereto. The input device 102 can be a ten key, a keyboard, a trackball, or a mouse. If the client 100 is, in particular, a laptop computer or a desktop computer, the input device 102 may be a keyboard or a mouse. If the display 101 is a touch panel, the display 101 also acts as the input device 102 in the present embodiment.

Fig. 3 shows the hardware configuration of the client 100.

Hardware includes a CPU (central processing unit) 111, a ROM (read only memory) 112, a RAM (random access memory) 113, and an interface 114, which are connected to one another via a bus 116.

The CPU 111 is an arithmetic unit for performing an operation. The CPU 111 executes computer programs recorded in the ROM 112 or the RAM 113, thereby executing processing as will be discussed later. The hardware may include an HDD (hard disk drive) and other large-capacity recorders, though not illustrated. The computer programs may be recorded in the large-capacity recorders.

The computer programs in the present embodiment include at least a computer program for enabling the client 100 to act as a client of the present invention. The computer program may be preinstalled or installed later in the client 100. The computer program may be installed in the client 100 via a predetermined recording medium, e.g., a memory card or via a network such as a LAN or the Internet.

The ROM 112 records computer programs and data for enabling the CPU 111 to execute processing as will be discussed later. Computer programs recorded in the ROM 112 are not limited to the above computer programs. If the client 100 is a smartphone, computer programs and data for enabling the client to act as a smartphone are recorded. For example, computer programs and data for implementing telephone calls and e-mails are recorded. The client 100 can view web sites based on data received via the network 400. A publicly known web browser for viewing web sites is installed on the client 100.

The RAM 113 provides a workspace for the processing of the CPU 111.

The interface 114 transfers data between the CPU 111 and the RAM 113, which are connected via the bus 116, and the outside. The interface 114 is connected to the display 101 and the input device 102. The operation contents inputted from the input device 102 are inputted from the interface 114 to the bus 116. As is commonly known, image data for displaying an image on the display 101 is outputted from the interface 114 to the display 101. The interface 114 is connected to a transmit/receive mechanism (not shown) that is known means for communicating with the outside via the network 400, that is, the Internet. This configuration allows the client 100 to transmit data via the network 400 and receive data via the network 400. Data may be transmitted and received via the network 400 through wire or wireless communications. For example, if the client 100 is a smartphone, wireless communications are typically performed. As long as such communications are possible, the transmit/receive mechanism can have a publicly or widely known configuration. Data received by the transmit/receive mechanism from the network 400 is received by the interface 114. Data transferred from the interface 114 to the transmit/receive mechanism is transmitted by the transmit/receive mechanism to the outside, for example, the server 200 via the network 400.

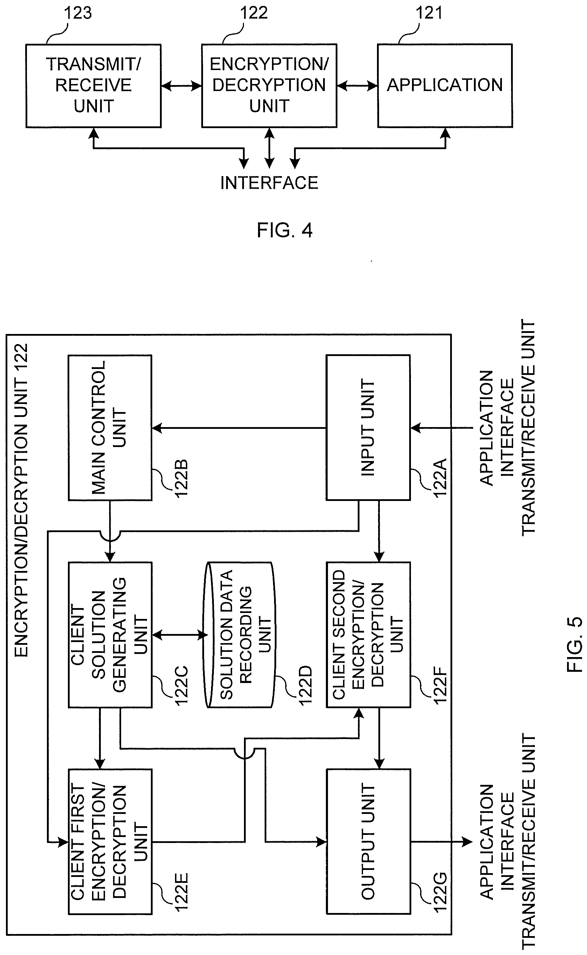

The CPU 111 executes the computer programs so as to generate a functional block in the client 100 as shown in Fig. 4. The functional block discussed below may be generated only by the functions of the computer programs for causing the client 100 to act as a client of the present invention. Alternatively, the functional block may be generated by cooperation between the computer programs and an OS and other computer programs that are installed on the client 100.

In the client 100, an application 121, an encryption/decryption unit 122, and a transmit/receive unit 123 are generated in association with the functions of the present invention.

The application 121 is, for example, publicly known browser software or e-mail software and the transmit/receive unit 123 is software for transmitting and receiving data via the network 400. The application 121 and the transmit/receive unit 123 are not generated by the functions of the computer programs of the present invention.

The application 121 generates plaintext data to be encrypted and transmitted from the client 100 to the server 200 and decrypts data that is encrypted and transmitted from the server 200 to the client 100 for use. In consideration of this function, the application 121 is not limited to the above example. The application 121 is connected to the interface 114 and operates according to data on operation contents received from the input device 102 via the interface 114. As a result of the operation, the application 121 generates plaintext data to be encrypted and transmitted to the server 200 via the network 400. The data is transmitted to the encryption/decryption unit 122. The application 121 also generates, for example, the image data as a result of the operation. The image data is transmitted to the interface 114 and then is transmitted therefrom to the display 101.

The transmit/receive unit 123 is a functional block that transmits and receives data to and from the server 200 or the like via the network 400. The transmit/receive unit 123 has publicly and widely known functions, for example, determination of a destination address and writing of predetermined contents in data to be transmitted. The transmit/receive unit 123 can perform communications using at least TCP/IP via the network 400. Data received by the transmit/receive mechanism from the network 400 is received by the transmit/receive unit 123 via the interface 114. The transmit/receive unit 123 transmits, to the encryption/decryption unit 122, data received from the transmit/receive mechanism via the interface 114. Moreover, the transmit/receive unit 123 may receive data from the encryption/decryption unit 122. The transmit/receive unit 123 transmits, to the interface 114, data received from the encryption/decryption unit 122 and then transmits the data from the transmit/receive mechanism to the server 200 via the network 400.

To put it simply, the encryption/decryption unit 122 has the functions of optionally decrypting data received from the transmit/receive unit 123 and optionally encrypting data received from the application 121, and performs necessary processing for the authentication of the client 100 with the server 200. In other words, the encryption/decryption unit 122 plays a key role in encrypted communications between the client 100 and the server 200 according to the present invention and is generated in the client 100 by the computer program for enabling the computer of the present invention to act as a client.

Moreover, the encryption/decryption unit 122 may receive data on operation contents inputted from the input device 102, via the interface 114.

An input unit 122A, a main control unit 122B, a client solution generating unit 122C, a solution data recording unit 122D, a client first encryption/decryption unit 122E, a client second encryption/decryption unit 122F, and an output unit 122G are generated in the encryption/decryption unit 122.

The input unit 122A receives data from the interface 114 or the application 121. If data on operation contents is inputted from the input device 102 via the interface 114, the input unit 122A transmits the data to the main control unit 122B. As will be discussed later, the input unit 122A may receive encrypted data from the server 200 via the interface 114 and the transmit/receive unit 123, the data being encrypted with a common key. When receiving the data, the input unit 122A transfers the data to the client second encryption/decryption unit 122F. As will be discussed later, the input unit 122A may receive data on an encrypted common key from the server 200 via the interface 114 and the transmit/receive unit 123. When receiving the data, the input unit 122A transmits the data to the client first encryption/decryption unit 122E. The input unit 122A may further receive data transmitted from the application 121 via the interface 114 and the transmit/receive unit 123. As will be discussed later, the data is intended to be transmitted to the server 200 after being encrypted. When receiving the data, the input unit 122A transmits the data to the client second encryption/decryption unit 122F.

The main control unit 122B controls the overall encryption/decryption unit 122. As described above, the main control unit 122B may receive data on operation contents from the input unit 122A. When receiving the data, the main control unit 122B optionally sends an instruction based on the data to a functional block in the encryption/decryption unit 122. When receiving data, for example, the main control unit 122B sends the client solution generating unit 122C an instruction to generate a solution.

The client solution generating unit 122C can successively generate solutions. The solutions are at least one list of numbers, characters, and symbols. As will be discussed later, the server 200 includes a server solution generating unit configured to successively generate solutions. In a comparison between a solution generated by the server solution generating unit and a solution generated by the client solution generating unit 122C, the solutions generated under common conditions always agree with each other. To put it simply, the client solution generating unit 122C and the server solution generating unit are synchronized with each other or a solution generated by the client solution generating unit 122C and a solution generated by the server solution generating unit are synchronized with each other. Solutions may be generated by any method in the client solution generating unit 122C and the server solution generating unit as long as the synchronization is achieved.

As has been discussed, solutions may be generated by any method in the client solution generating unit 122C and the server solution generating unit as long as the foregoing conditions are satisfied. Such techniques have been completed and practically used as techniques of generating one-time passwords. Such techniques are applicable to the client solution generating unit 122C and the server solution generating unit. More specifically, in the client solution generating unit 122C as well as in the server solution generating unit, a solution is obtained by performing, for example, a predetermined operation on an initial value, a subsequent solution is obtained by performing the predetermined operation again on the solution, and then a subsequent solution is obtained by performing the predetermined operation again on the solution. This processing is repeated so as to successively generate solutions. Such a technique is known as a technique for generating pseudorandom numbers.

A more specific method for generating solutions will be described below.

In order to generate solutions, an initial value (at least two values may be used as shown in (a) and (c) below) is used and past values are substituted for predetermined functions so as to sequentially generate new values. This method is performed each time a solution is necessary. Thus, the solutions can be successively generated. In this case, the solutions are pseudorandom numbers dependent on the initial value.

Examples of the functions used for generating the solutions are shown in (a) to (c) below. Equations in (a) to (c) are all formulated to generate $X_N$, the N-th solution. P, Q, R, and S are natural numbers.

$$(a) \quad (X_N) \ = \ (X_{N-1})^P \ + \ (X_{N-2})^Q$$

$$(b) \quad (X_N) \ = \ (X_{N-1})^P$$

$$(c) \quad (X_N) \ = \ (X_{N-1})^P (X_{N-2})^Q (X_{N-3})^R (X_{N-4})^S$$

In (a), two past solutions are used. The solutions are multiplied by P and Q, respectively, and are summed into a new solution. To be precise, the two past solutions multiplied by P and Q, respectively, are typically summed into a solution having a larger number of digits. Thus, a new solution is actually generated by extracting, for example, a proper number of digits from the head of an obtained value, a proper number of digits from the tail of the value, or a proper number of digits from a proper portion of the value.

In (b), a past solution is used. The solution is multiplied by P into a new solution. The number of digits is adjusted as described above.

In (c), four past solutions are used. The solutions are multiplied by P, Q, R, and S, respectively, into a new solution. The number of digits is adjusted as described above.

The above-mentioned (a) to (c) indicate examples of algorithms for generating solutions. The algorithms can be changed in the generation of the solutions. For example, (a) to (c) can be sequentially used in a different way. The solutions with time dependency can be changed with time.

In any event, the server solution generating unit of the server 200 and the client solution generating unit 122C are configured to synchronize solutions in the above-mentioned manner.

The client solution generating unit 122C of the present embodiment generates solutions according to the algorithm of (a). The algorithm is not particularly limited. In this case, an initial value or a past solution is necessary for generating a new solution. An initial value is recorded in the solution data recording unit 122D. Each time the client solution generating unit 122C generates a new solution, the initial value is overwritten with the new solution. The new solution is then overwritten with another new solution. In this way, an initial value or a solution is recorded in the solution data recording unit 122D. Each time the client solution generating unit 122C generates a new solution, the new solution is read from the solution data recording unit 122D.

When a solution is generated, the client solution generating unit 122C transmits the solution to the client first encryption/decryption unit 122E or the output unit 122G.

The client first encryption/decryption unit 122E is configured to perform encryption and decryption. As will be discussed later, the present embodiment is sufficiently implemented as long as at least decryption is performed. The client first encryption/decryption unit 122E can decrypt at least data encrypted by the server first encryption/decryption unit of the server 200. The server first encryption/decryption unit will be discussed later. Solutions are used for encryption and decryption by the client first encryption/decryption unit 122E. As described above, the solution generated by the client solution generating unit 122C is transmitted from the client solution generating unit 122C to the client first encryption/decryption unit 122E. The solution is used for decryption in the client first encryption/decryption unit 122E. The client first encryption/decryption unit 122E receives data on the encrypted common key from the input unit 122A. As will be discussed later, the data on the common key is transmitted from the server 200. The data is encrypted by the server first encryption/decryption unit of the server 200 as will be discussed later. Specifically, the client first encryption/decryption unit 122E can decrypt the data on the encrypted common key by using the solution.

The client first encryption/decryption unit 122E transmits the data on the decrypted common key to the client second encryption/decryption unit 122F.

The client second encryption/decryption unit 122F performs encryption and decryption. The encryption and decryption are performed using the common key transmitted from the client first encryption/decryption unit 122E. The target of encryption is plaintext data transmitted from the application 121 via the input unit 122A. The target of decryption is encrypted data that is transmitted from the server 200 via the network 400, the transmit/receive mechanism, the interface 114, and the input unit 122A.

The encryption and decryption by the client second encryption/decryption unit 122F may be performed in any way as long as the encryption and decryption are performed in a common key system with a common key. For example, the publicly or widely known technique used in the SSL communications of (3) described in Background Art of the present application may be applied to the encryption and decryption. For example, the client second encryption/decryption unit 122F can perform DES cryptography.

The client second encryption/decryption unit 122F encrypts data transmitted from the application 121 and then transmits the data to the output unit 122G. The client second encryption/decryption unit 122F decrypts encrypted data transmitted from the server 200 and then transmits the data to the output unit 122G.

The output unit 122G is configured to output data generated in the encryption/decryption unit 122 to the outside.

The output unit 122G may receive a solution from the client solution generating unit 122C. The output unit 122G may also receive encrypted data from the client second encryption/decryption unit 122F, the data being encrypted by the client second encryption/decryption unit 122F after being transmitted from the application 121. Moreover, the output unit 122G may receive decrypted data from the client second encryption/decryption unit 122F, the data being decrypted by the client second encryption/decryption unit 122F after being transmitted as encrypted data from the server 200.

The output unit 122G transmits the solution and the data encrypted by the client second encryption/decryption unit 122F after being transmitted from the application 121, to the interface 114 via the transmit/receive unit 123. The data transmitted to the interface 114 is transmitted to the server 200 via the transmit/receive mechanism and the network 400. The output unit 122G also transmits, to the application 121, the data decrypted by the client second encryption/decryption unit 122F after being transmitted as encrypted data from the server 200. The data is used in the application 121.

The configuration of the server 200 will be described below.

The server 200 may be a publicly or widely known existing server acting as hardware. The server 200 may have an ordinary hardware configuration. Roughly speaking, the server 200 can follow the hardware configuration of the client 100 in which the CPU 111, the ROM 112, the RAM 113, and the interface 114 are connected via the bus 116. The server 200 typically includes an HDD and other large-capacity recorders.

The configurations and functions of the CPU, the ROM, the RAM, the interface, the bus, and the large-capacity recorders in the server 200 are identical to those in the client 100. Like the transmit/receive mechanism of the client 100, the interface of the server 200 is connected to the transmit/receive mechanism for communicating with an external device of the server 200 via the network 400. The interface of the server 200 may be connected to a display and an input device as in the client 100. The configuration is not closely related to the present application and thus the explanation thereof is omitted.

The execution of computer programs recorded in the ROM and the large-capacity recorders in the server 200 generates a functional block in the server 200 as will be discussed below. The functional block discussed below may be generated only by the function of the computer program for causing the server 200 to act as a server of the present invention. Alternatively, the functional block may be generated by cooperation between the computer program and an OS and other computer programs that are installed on the server 200. The computer programs may be installed on the server 200 via a predetermined recording medium, e.g., a memory card or via a network such as a LAN or the Internet. The circumstances are similar to those of the client 100.

In the server 200, an application 221, an encryption/decryption unit 222, and a transmit/receive unit 223 are generated in association with the functions of the present invention.

The application 221 is, for example, known software for displaying a desired image on the browser of the client 100 or software for payment in Internet banking based on the decision of a user who operates the client 100. The transmit/receive unit 223 is software for transmitting and receiving data via the network 400. The application 221 and the transmit/receive unit 223 are not generated by the functions of the computer programs of the present invention. The circumstances are similar to those of the client 100.

The application 221 generates plaintext data to be encrypted and transmitted from the server 200 to the client 100 and decrypts encrypted data that is transmitted from the client 100 to the server 200. As long as such an operation is performed, the application 221 is not limited to the above example. The application 221 is connected to the interface and automatically operates according to data on operation contents received from the input device via the interface or a prepared program. As a result of the operation, the application 221 generates plaintext data to be encrypted and transferred to the client 100 via the network 400. The data is transmitted to the encryption/decryption unit 222. The application 221 may also generate, for example, image data as a result of the operation. The image data is transmitted to the interface and then is transmitted to the display of the server 200 so as to display an image.

The transmit/receive unit 223 is a functional block that transmits and receives data to and from the client 100 or the like via the network 400. The transmit/receive unit 223 has publicly and widely known functions of, for example, determining a destination address and writing predetermined contents in data to be transmitted. The transmit/receive unit 223 can perform communications using at least TCP/IP via the network 400. Data received by the transmit/receive mechanism from the network 400 is received by the transmit/receive unit 223 via the interface. The transmit/receive unit 223 transmits, to the encryption/decryption unit 222, data received from the transmit/receive mechanism via the interface. Moreover, the transmit/receive unit 223 may receive data from the encryption/decryption unit 222. The transmit/receive unit 223 transmits, to the interface, data received from the encryption/decryption unit 222 and transmits the data from the transmit/receive mechanism to the client 100 via the network 400.

To put it simply, the encryption/decryption unit 222 has the functions of optionally decrypting data received from the transmit/receive unit 223 and optionally encrypting data received from the application 221, and performs necessary processing for the authentication of the client 100 with the server 200. In other words, the encryption/decryption unit 222 plays a key role in encrypted communications between the client 100 and the server 200 according to the present invention and is generated in the server 200 by the computer program for enabling the computer of the present invention to act as a server.

Moreover, the encryption/decryption unit 222 may receive data on operation contents inputted from the input device, via the interface.

An input unit 222A, a main control unit 222B, a server solution generating unit 222C, a solution data recording unit 222D, a server first encryption/decryption unit 222E, a server second encryption/decryption unit 222F, an output unit 222G, and an authentication unit 222H are generated in the encryption/decryption unit 222.

The input unit 222A receives data from the interface or the application 221. As will be discussed later, the input unit 222A may receive encrypted data from the client 100 via the interface and the transmit/receive unit 223, the data being encrypted with a common key. When receiving the data, the input unit 222A transmits the data to the server second encryption/decryption unit 222F. As will be discussed later, data on solutions transmitted from the client 100 may be inputted to the input unit 222A via the interface. When receiving the data, the input unit 222A transmits the data to the main control unit 222B. The input unit 222A may further receive data transmitted from the application 221 via the interface. As will be discussed later, the data is intended to be transmitted to the client 100 after being encrypted. When receiving the data, the input unit 222A transmits the data to the server second encryption/decryption unit 222F.

The main control unit 222B controls the overall encryption/decryption unit 222. As described above, data on solutions transmitted from the client 100 may be received by the main control unit 222B from the input unit 222A. When receiving the data, the main control unit 222B transmits the data to the authentication unit 222H and sends the server solution generating unit 222C an instruction to generate a solution. The main control unit 222B may also receive authentication data, which will be discussed later, from the authentication unit 222H. When receiving the data, the main control unit 222B sends the server solution generating unit 222C an instruction to generate a solution.

The main control unit 222B has the function of holding or generating a common key. In the present embodiment, the main control unit 222B can generate a common key when necessary. The common key can be generated according to a publicly or widely known technique. When receiving the authentication data, the main control unit 222B transmits data on the generated common key to the server first encryption/decryption unit 222E.

The server solution generating unit 222C can successively generate solutions like the client solution generating unit 122C. The solutions successively generated by the server solution generating unit 222C agree with solutions successively generated by the client solution generating unit 122C under common conditions. In the present embodiment, the solutions are successively generated by the server solution generating unit 222C and the client solution generating unit 122C according to a common method.

Data for generating a new solution, that is, the same initial value or past solution data as in the solution data recording unit 122D of the client 100 is recorded in the solution data recording unit 222D. It is necessary for the server 200 to authenticate the multiple clients 100. Thus, in the server 200, data for identifying the client 100 (in the present embodiment, the IP address of the client 100 is used as data for identifying the client 100 but other data may be used, for example, a unique identifier that has been allocated to the client 100 from the timing of sale of the client 100 and is strictly managed by a vendor of the client 100 or an organization for authentication) and data for generating a new solution for each of the clients 100 are recorded so as to be associated with each other. Specifically, in the present embodiment, the solutions are successively generated in different rows for the clients 100 by the client solution generating unit 122C. The server 200 can generate solutions in the same rows as the rows of solutions generated by the clients 100. In other words, the server solution generating unit 222C of the server 200 and the client solution generating unit 222C in each of the clients 100 are configured to synchronize the solutions.

When generating a solution, the server solution generating unit 222C transmits the solution to the server first encryption/decryption unit 222E or the authentication unit 222H. When the solution generating unit 222C transmits the solution to the authentication unit 222H, data recorded for specifying the client 100 in the solution data recording unit 222D is also transmitted to the authentication unit 222H. The data is referred to in the generation of the solution.

The server first encryption/decryption unit 222E is configured to perform encryption and decryption. As will be discussed later, the present embodiment is sufficiently implemented as long as at least encryption is performed. Data encrypted by the server first encryption/decryption unit 222E can be decrypted at least by the client first encryption/decryption unit 122E of the client 100. As in the encryption and decryption by the client first encryption/decryption unit 122E, solutions are used for encryption and decryption by the server first encryption/decryption unit 222E. As described above, the solution generated by the server solution generating unit 222C is transmitted from the server solution generating unit 222C to the server first encryption/decryption unit 222E. The solution is used for the encryption performed by the server first encryption/decryption unit 222E. The server first encryption/decryption unit 222E receives data on the common key from the main control unit 222B. As will be discussed later, the data on the common key is transmitted to the client 100. The data is encrypted by the server first encryption/decryption unit 222E. As will be discussed later, the data on the encrypted common key is decrypted back into the data on the common key by the client first encryption/decryption unit 122E.

The server first encryption/decryption unit 222E transmits the plaintext data on the common key to the server second encryption/decryption unit 222F. Furthermore, the server first encryption/decryption unit 222E transmits the data on the encrypted common key to the output unit 222G.

The server second encryption/decryption unit 222F is configured to perform encryption and decryption. The encryption and decryption are performed using the common key transmitted from the server first encryption/decryption unit 222E. The target of encryption is plaintext data transmitted from the application 221 via the input unit 222A. The target of decryption is encrypted data that is transmitted from the client 100 via the network 400, the transmit/receive mechanism, the interface, and the input unit 222A.

The encryption and decryption by the server second encryption/decryption unit 222F may be performed in any way as long as a common key is used in the encryption and decryption. If the same common key is used, data encrypted by the server second encryption/decryption unit 222F can be decrypted by the client second encryption/decryption unit 122F while data encrypted by the client second encryption/decryption unit 122F can be decrypted by the server second encryption/decryption unit 222F.

The server second encryption/decryption unit 122F encrypts data from the application 221 and then transmits the data to the output unit 222G. The server second encryption/decryption unit 222F decrypts encrypted data transmitted from the client 100 and then transmits the data to the output unit 222G.

The authentication unit 222H is configured to determine whether the client 100 is authorized or not, that is, to authenticate the client 100. As described above, data on solutions transmitted from the client 100 is transmitted to the authentication unit 222H from the main control unit 222B. Moreover, the authentication unit 222H receives data on solutions from the solution data recording unit 222D and data that is referred to in the generation of the solutions and specifies the client 100. The authentication unit 222H determines whether the client 100 is authorized or not, by using the three kinds of data. When the client 100 is authenticated, authentication data is generated. A specific authentication method will be described later.

When the authentication is performed, the authentication unit 222H generates authentication data and transmits the authentication data to the main control unit 222B.

The output unit 222G is configured to output data generated in the encryption/decryption unit 222 to the outside.

The output unit 222G may receive encrypted data from the server second encryption/decryption unit 222F, the data being encrypted by the server second encryption/decryption unit 222F after being transmitted from the application 221. Moreover, the output unit 222G may receive decrypted data from the server second encryption/decryption unit 222F, the data being decrypted by the server second encryption/decryption unit 222F after being transmitted as encrypted data from the client 100.

The output unit 222G transmits the data encrypted by the server second encryption/decryption unit 222F after being transmitted from the application 221, to the interface via the transmit/receive unit 223. The data transmitted to the interface is transmitted to the client 100 via the transmit/receive mechanism and the network 400. The output unit 222G also transfers, to the application 221, the data decrypted by the server second encryption/decryption unit 222F after being transferred as encrypted data from the client 100. The data is used in the application 221.

The method of use and operations of the communication system including the client 100 and the server 200 will be described below.

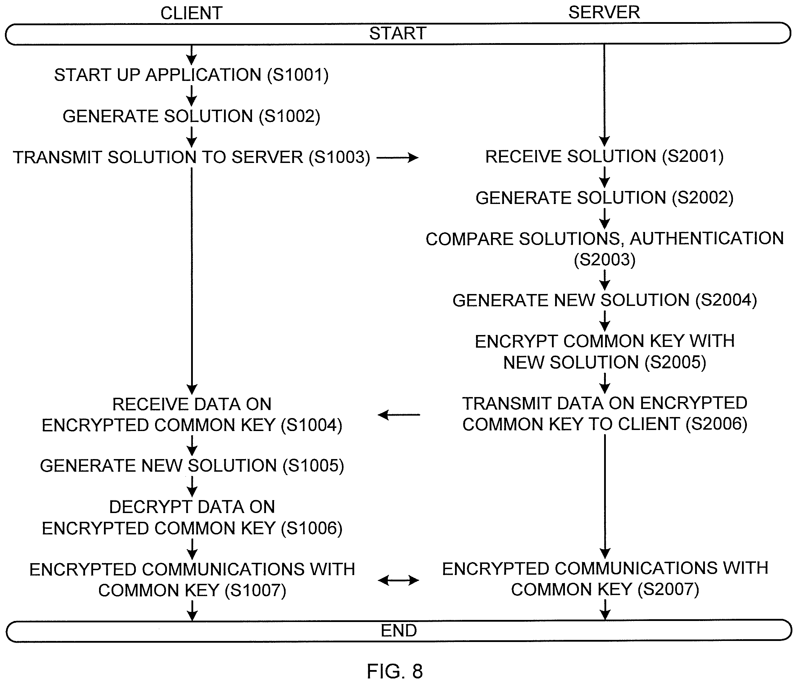

The description mainly refers to Fig. 8.

First, a user operates the client 100 and attempts to carry out communications between the client 100 and the server 200. For example, the user connects to the server 200 and attempts to view web sites provided by the server 200.

For this operation, the user first starts up the application 121 on the client 100 (S1001). The application 121 started for viewing web sites is typically a known browser. The user optionally operates the input device 102 so as to start up the browser. The operation contents for starting up the browser are transmitted from the input device 102 to the application 121 via the interface 114. Thus, the application 121 is started and image data is transmitted to the display 101 via the interface 114, so that the browser is displayed on the display 101 of the client 100.

In this state, the user attempts to view web sites provided by the server 200. Typically, the client 100 specifies the web address (URL) of the server 200 so as to start communications with the server 200. At this point, the client 100 first starts processing for the authentication of the client 100. Specifically, when the user specifies the web address of the server 200 on the browser, data on the operation contents is transmitted from the input device 102 to the input unit 122A via the interface 114. The data on the operation contents is transmitted from the input unit 122A to the main control unit 122B. When receiving data, the main control unit 122B sends the client solution generating unit 122C an instruction to generate a solution. The client solution generating unit 122C generates the solution (S1002).

The client solution generating unit 122C generates the solution according to the foregoing method. If the client solution generating unit 122C generates a solution for the first time, the client solution generating unit 122C reads an initial value from the solution data recording unit 122D, otherwise the client solution generating unit 122C reads a past solution from the solution data recording unit 122D. Based on the initial value or the past solution, the client solution generating unit 122C generates a new solution. The generated solution is transmitted from the client solution generating unit 122C to the output unit 122G.

The output unit 122G transmits the received solution to the transmit/receive unit 123. The transmit/receive unit 123 performs predetermined processing, for example, the attachment of a header to data on the solution according to the TCP/IP protocols. At this point, the header includes the IP address of the client 100 and the web address of the server 200. The IP address of the client 100 is information for discriminating the client 100 from other clients 100. In SSL communications, common rules are established in which a predetermined number (typically 443) is described as the port number of a destination subsequently to a web address, indicating that data including the header requires SSL communications. Encrypted communications may also conform to the rules. In any case, the data on the solution with the header is transmitted from the transmit/receive unit 123 to the transmit/receive mechanism via the interface 114.

The data on the solution is transmitted from the transmit/receive mechanism to the server 200 via the Internet (S1003). The data on the solution can be transmitted to the server 200 after being encrypted in the client 100. In the present embodiment, the solution is transmitted to the server 200 without being encrypted.

The solution is received by the server 200 (S2001). Specifically, the data on the solution is received by the transmit/receive mechanism of the server 200 and is transmitted from the interface to the transmit/receive unit 223. The transmit/receive unit 223 transmits, to the input unit 222A, the data on the solution and the IP address of the client 100 that is a sender of the solution. The IP address is included in the header. The data and the IP address are transmitted from the input unit 222A to the main control unit 222B.

The main control unit 222B transmits the data on the solution and the IP address, which are associated with each other, to the authentication unit 222H.

Moreover, the main control unit 222B transmits the data on the IP address to the server solution generating unit 222C and sends the server solution generating unit 222C an instruction to generate a solution. When receiving the data and the instruction, the server solution generating unit 222C generates the solution (S2002). The server solution generating unit 222C reads data associated with the IP address received from the main control unit 222B, from among data (data on the initial value or past solutions) for generating a new solution for each of the clients 100 recorded in the solution data recording unit 222D. Subsequently, a new solution is generated using the data on the initial value or past solutions according to the foregoing method. The server solution generating unit 222C transmits, to the authentication unit 222H, the generated solution and the IP address for specifying the client 100 that is a sender of the solution. The solution and the IP address are associated with each other.

As described above, the authentication unit 222H has the solution and the IP address that have been transmitted from the main control unit 222B. The authentication unit 222H has the solution and the IP address that have been transmitted from the server solution generating unit 222C. In this case, IP addresses are necessary. This is because if multiple solutions are transmitted from the multiple clients 100 in a short time, which ones of the solutions should be compared with each other may be unclear at the time of a comparison between the solution transmitted from the main control unit 222B and the solution transmitted from the server solution generating unit 222C. The comparison is performed in the authentication unit 222H as will be discussed later. The present invention is not limited to this comparison. In the present embodiment, the solution transmitted from the main control unit 222B associated with the same IP address and the solution transmitted from the server solution generating unit 222C are compared with each other so as to verify whether the client 100 having transmitted the solution is authorized or not.

As described above, the solution generated by the server solution generating unit 222C is synchronized with the solution generated by the client solution generating unit 122C of the client 100. Thus, if the client 100 is authorized, the two solutions to be compared with each other always agree with each other. If the solutions agree with each other, the authentication unit 222H authenticates the client 100 that is a sender of the solution, and generates authentication data on the authentication (S2003).

The authentication data associated with the IP address of the authenticated client 100 is transmitted to the main control unit 222B. If the two solutions do not agree with each other, the authentication unit 222H can notify the main control unit 222B that the client 100 is not authorized, and then cut off communications between the client 100 and the server 200 in the present embodiment. As a matter of course, the server 200 at this point may notify the client 100 that the client 100 has not been authenticated.

When receiving the authentication data and the IP address, the main control unit 222B generates the common key for performing encrypted communications with the client 100 identified by the IP address. As has been discussed, the common key may be generated by a known method.

The main control unit 222B transmits the common key associated with the IP address to the server first encryption/decryption unit 222E and sends the server solution generating unit 222C an instruction to generate a new solution. The server solution generating unit 222C generates at least one solution (S2004). The generated solution is transmitted with the IP address serving as a trigger of the instruction to generate the solution, to the server first encryption/decryption unit 222E. In this case, the solution is generated by the server solution generating unit 222C under predetermined conditions, for example, the number of solutions to be generated or which one of the solutions (e.g., the second generated solution or the one hundredth generated solution) is to be transmitted to the server first encryption/decryption unit 222E. This information is shared with the client 100.

As described above, the server first encryption/decryption unit 222E encrypts the received data on the common key (S2005). The solution transmitted from the server solution generating unit 222C is used for the encryption. The solution used for encrypting the common key may be selected with the same IP address associated with the common key. The encryption is performed by the server first encryption/decryption unit 222E such that data obtained as a result of encryption depends on the solution. The solution may be used in any way as long as data obtained as a result of encryption depends on the solution. For example, the solution may be an encryption key. At this point, data on the IP address associated with the data on the common key is not encrypted.

The data on the encrypted common key is transmitted, to the output unit 222G, with data on an IP address that is associated with the data on the common key before encryption.

In the meantime, the server first encryption/decryption unit 222E transmits the plaintext data on the common key to the server second encryption/decryption unit 222F. Thus, the server second encryption/decryption unit 222F has the common key required for encrypted communications in the common key system.

The output unit 222G transmits the data to the transmit/receive unit 223. The transmit/receive unit 223 attaches a header indicating a destination to the data on the encrypted common key. The destination can be specified by the IP address. The data on the encrypted common key with the header is transmitted from the transmit/receive unit 223 to the interface and then is transmitted from the transmit/receive mechanism to the client 100 via the network 400 (S2006).

The client 100 receives the data on the encrypted common key (S1004). The data on the encrypted common key is received by the transmit/receive mechanism of the client 100 and is transmitted to the transmit/receive unit 123 via the interface 114. The transmit/receive unit 123 transmits the data to the input unit 122A.

The input unit 122A transmits the data on the encrypted common key to the client first encryption/decryption unit 122E. In the meantime, the input unit 122A sends a notification on the reception of the data on the encrypted common key to the main control unit 122B. When receiving the data, the main control unit 122B sends the client solution generating unit 122C an instruction to generate a new solution.

When receiving the instruction, the client solution generating unit 122C generates at least one new solution (S1005). The generated solution is transmitted from the client solution generating unit 122C to the client first encryption/decryption unit 122E.

In this case, the solution is generated by the client solution generating unit 122C under predetermined conditions, for example, the number of solutions to be generated or which one of the solutions (e.g., the second generated solution or the one hundredth generated solution) is to be transmitted to the client first encryption/decryption unit 122E. This information is shared with the server 200. The client solution generating unit 122C can successively generate common keys with the server solution generating unit 222C under common conditions. Thus, as the solution used for encrypting the data on the common key by the server first encryption/decryption unit 222E, completely the same solution as the solution generated by the server solution generating unit 222C and transmitted to the server first encryption/decryption unit 222E is transmitted from the client solution generating unit 122C to the client first encryption/decryption unit 122E.

The client first encryption/decryption unit 122E decrypts the data on the encrypted common key by using the solution, so that the data is decrypted back into plaintext data on the common key (S1006). The decryption by the client first encryption/decryption unit 122E depends on the solution. If the same solution is used, the data encrypted by the server solution generating unit 222C can be decrypted into original plaintext data. Thus, the data on the encrypted common key is decrypted back into the data on the common key as generated by the main control unit 222B of the server 200.

Subsequently, the data on the common key is transmitted from the client first encryption/decryption unit 122E to the client second encryption/decryption unit 122F. Thus, the client second encryption/decryption unit 122F has the common key required for encrypted communications in the common key system.

In other words, the processing allows the server second encryption/decryption unit 222F in the server 200 and the client second encryption/decryption unit 122F in the client 100 to have the common key. In the present embodiment, the common key originally set in the server 200 is provided for the client 100 from the server 200. Furthermore, the encrypted common key to be provided for the client 100 from the server 200 is encrypted in the server 200 and then is provided for the client 100. In order to encrypt the common key in the server 200 or in order to decrypt the encrypted common key in the client 100, identical solutions generated in the server 200 and the client 100 are used. Additionally, the solutions are provided only in the server 200 and the client 100 and are not transmitted between the server 200 and the client 100 via the network 400. In other words, a malicious third party does not have an opportunity to steal the solutions required for the encryption and decryption of the common key in the above-mentioned processing.

If the server second encryption/decryption unit 222F in the server 200 and the client second encryption/decryption unit 122F in the client 100 have the common key, the server 200 and the client 100 can perform encrypted communications as in the process of (3) describing conventional SSL communications.

Such encrypted communications are implemented by transmitting encrypted data from the client 100 to the server 200 or from the server 200 to the client 100 (S1007, S2007).

For example, data to be encrypted and transmitted to the server 200 is generated by the application 121 of the client 100, and then the data is transmitted from the application 121 to the encryption/decryption unit 122. When the input unit 122A of the encryption/decryption unit 122 receives the data, the data is transmitted to the client second encryption/decryption unit 122F and is encrypted therein with the common key. The encrypted data is transmitted from the output unit 122G to the transmit/receive unit 123, after the processing of attaching a header to the encrypted data is performed optionally, the encrypted data is transmitted with the header from the interface 114 to the transmit/receive mechanism, and then is transmitted to the server 200 via the network 400.

The server 200 receives the data by means of the transmit/receive mechanism. The data is transmitted from the transmit/receive mechanism of the server 200 to the interface and then is transmitted to the input unit 222A via the transmit/receive unit 223. The encrypted data is decrypted with the common key by the server second encryption/decryption unit 222F and then is transmitted to the output unit 222G. The output unit 222G transmits the decrypted data to the application 221 and the application 221 optionally uses the data.

In the meantime, the application 221 of the server 200 may generate plaintext data to be encrypted and transmitted to the client 100. If the application 221 generates such data, the data is transmitted to the input unit 222A in the encryption/decryption unit 222. The data is transmitted from the input unit 222A to the server second encryption/decryption unit 222F and then is decrypted therein with the common key. The data encrypted by the server second encryption/decryption unit 222F is transmitted to the transmit/receive unit 223 via the output unit 222G. The transmit/receive unit 223 optionally performs the processing of attaching a header to the encrypted data. The processed data is transmitted from the transmit/receive unit 223 to the transmit/receive mechanism of the server 200 via the interface and is transmitted to the client 100 via the network 400.

The client 100 receives the data by means of the transmit/receive mechanism. The data is transmitted from the transmit/receive mechanism of the client 100 to the interface 114 and then is transmitted to the input unit 122A via the transmit/receive unit 123. The encrypted data is decrypted with the common key by the client second encryption/decryption unit 122F and is transmitted to the output unit 122G. The output unit 122G transmits the decrypted data to the application 121 and the application 121 optionally uses the data.

In this way, encrypted communications with the common key in the common key system are performed between the server 200 and the client 100.

In the encrypted communications, encryption and decryption are performed by the encryption/decryption unit 222 in the server 200, the encryption/decryption unit 222 being provided between the application 221 and the transmit/receive unit 223 for performing TCP/IP communications. In the client 100, encryption and decryption are performed by the encryption/decryption unit 122 provided between the application 121 and the transmit/receive unit 123 for performing TCP/IP communications. Encryption and decryption between an application and TCP/IP are shared with the conventional SSL communication protocol. Thus, the invention of the embodiment is relatively easily applied to existing SSL communications. In the present invention, encryption and decryption are not always performed between the application and TCP/IP.

If communications are not necessary, communications between the server 200 and the client 100 are terminated.

<First Modification>

A communication system in a first modification will be described below.

The communication system in the first modification is substantially identical to that of the first embodiment. The first modification is different from the first embodiment in the authentication of the other party of communications. In communications between the client 100 and the server 200 in the communication system of the first embodiment, the server 200 authenticates the client 100 only by the authentication unit 222H in the server 200, whereas in the first modification, the client 100 also authenticates the server 200.

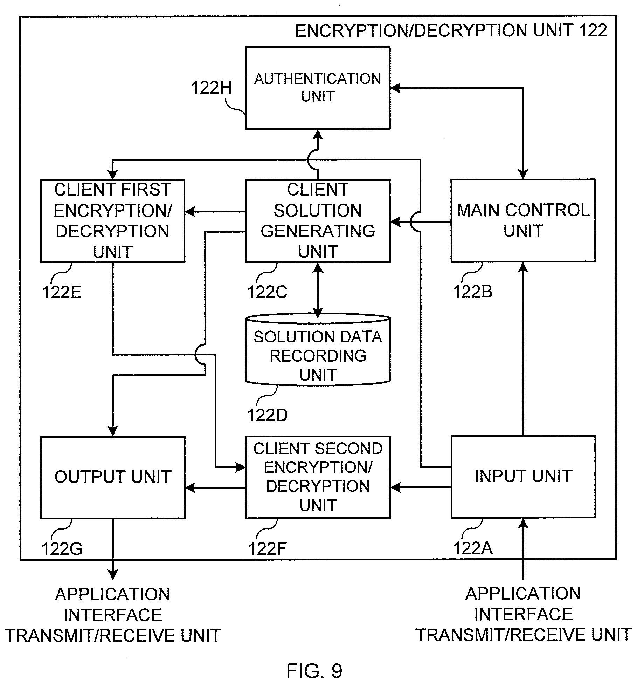

According to the difference, the client 100 in the first modification includes an authentication unit 122H (Fig. 9). The authentication unit 122H is configured to authenticate the server 200. A method of authenticating the server 200 by the authentication unit 122H is substantially the same as the method of authenticating the client 100 by the authentication unit 222H of the server 200. The method will be discussed later.

The functional blocks of the server 200 according to the first modification are identical to those of the first embodiment but some of the functional blocks have different functions from those of the first embodiment. The different functions of the functional blocks of the server 200 from those of the first embodiment will be discussed later.

The method of use and operations of the communication system according to the first modification will be described below.

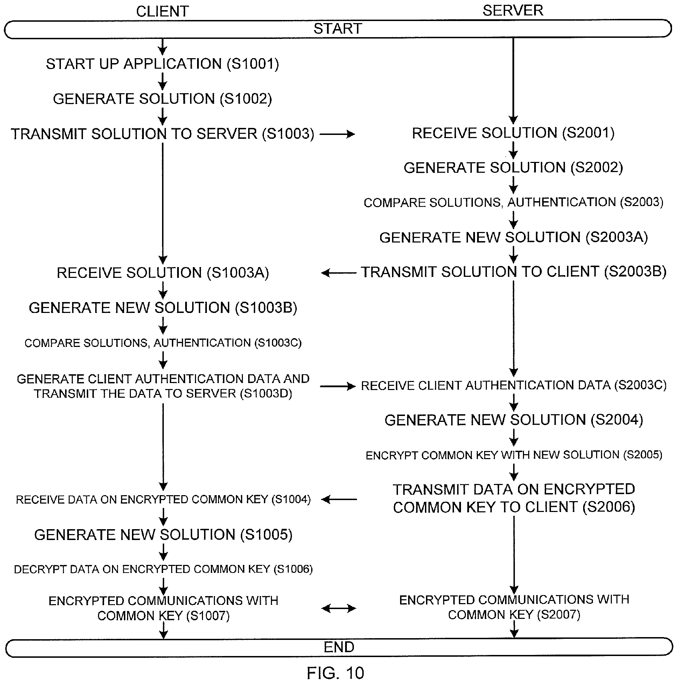

The method performed in the communication system is substantially the same as that of the first embodiment and thus differences will be mainly discussed below (Fig. 10).

First, the processing of S1001 to S1003 performed by the client 100 in the first embodiment and the processing of S2001 to S2003 performed by the server 200 in the first embodiment are identical to the processing of the first modification.

Also in the first modification, the authentication unit 222H of the server 200 authenticates the client 100 (S2003). The authentication generates authentication data in the first modification as in the first embodiment.

In the first embodiment, the authentication data generated by the authentication unit 222H is transmitted to the main control unit 222B, a new solution is generated (S2004), and then the common key is encrypted using the new solution (S2005). However, in the first modification, the client 100 performs processing for authenticating the server 200 after the authentication data is generated by the authentication unit 222H.

When the authentication unit 222H generates the authentication data, the authentication data is transmitted, to the main control unit 222B, with an IP address for specifying the client 100 that is a sender of a solution serving as a trigger of the generation of the authentication data. When receiving the authentication data, the main control unit 222B transmits the authentication data and the IP address to the server solution generating unit 222C and sends the server solution generating unit 222C an instruction to generate a new solution. When receiving the data and the instruction, the server solution generating unit 222C generates at least one solution for the IP address and transmits one of generated solutions to the output unit 222G (S2003A). The solution is used when the client 100 authenticates the server 200. In the server 200, which one of the solutions is to be transmitted from the server solution generating unit 222C to the output unit 222G, that is, which one of the solutions is used for authenticating the server 200 in the client 100 is determined in advance. The determination is shared between the server 200 and the client 100. The new solution is transmitted with data on the IP address from the server solution generating unit 222C to the output unit 222G.

The output unit 222G transmits the received solution and data on the IP address to the transmit/receive unit 223. As described above, the transmit/receive unit 223 generates a header and transmits data on the new solution with the header to the transmit/receive mechanism of the server 200 via the interface. The data on the new solution is transmitted from the server 200 to the client 100 specified by the IP address (S2003B).

The client 100 receives the data on the new solution from the server 200 (S1003A).

Specifically, the client 100 receives the data on the solution by means of the transmit/receive mechanism. The received data on the solution is transmitted from the transmit/receive mechanism to the transmit/receive unit 123 via the interface 114 and then is transmitted to the input unit 122A. The input unit 122A transmits the data on the solution to the main control unit 122B.

When receiving the new solution transmitted from the server 200, the main control unit 122B transmits the solution to the authentication unit 122H and sends the client solution generating unit 122C an instruction to generate a new solution. When receiving the instruction, the client solution generating unit 122C generates at least one solution and transmits one of generated solutions to the authentication unit 122H (S1003B). As described above, the server solution generating unit 222C of the server 200 shares conditions or information about the number of solutions generated by the client solution generating unit 122C and which one of the solutions is transmitted to the client solution generating unit 122C.

In this state, the authentication unit 122H of the client 100 has both of the solution transmitted from the server 200 and the solution generated by the client solution generating unit 122C of the client 100. The authentication unit 122H compares the two solutions. As a result of the comparison, if the two solutions agree with each other, the authentication unit 122H authenticates the server 200 that is a sender of the solution (S1003C). As has been discussed, the server solution generating unit 222C of the server 200 and the client solution generating unit 122C of the client 100 can successively generate common solutions under common conditions. Thus, if the server 200 and the client 100 share the condition that one of the successively generated solutions is used for authenticating the server 200, the solution transmitted from the server 200 always agrees with the solution generated by the client solution generating unit 122C as long as the server 200 is authorized. Even if a malicious third party pretends to be the server 200, the malicious third party does not know how the solution is generated by the server solution generating unit 222C. Thus, even if the malicious third party illegally acquires the solution that has been generated in the client 100 and transmitted in advance to the server 200 from the client 100, the same solution cannot be generated as has been generated by the server solution generating unit 222C and transmitted from the server 200 to the client 100. In other words, if the client 100 verifies whether the server 200 is authorized or not, it is substantially impossible for a malicious third party to pretend to be the server 200.

If the server 200 is authenticated, the authentication unit 122H generates client authentication data as information on the authentication. The client authentication data is transmitted to the main control unit 122B and is transmitted therefrom to the output unit 122G. Since it is not particularly necessary to process the client authentication data being transmitted from the main control unit 122B to the output unit 122G, a free path is set for transmitting the client authentication data from the main control unit 122B to the output unit 122G.

The output unit 122G transmits the client authentication data to the transmit/receive unit 123. The transmit/receive unit 123 optionally attaches a header to the client authentication data according to the foregoing processing and then transmits the data to the transmit/receive mechanism of the client 100 from the interface 114. The client authentication data is transmitted from the transmit/receive mechanism to the server 200 via the network 400 (S1003D).

The server 200 receives the authentication data from the client 100 (S2003C).

The client authentication data is transmitted with the IP address of the client 100 that is a sender of the client authentication data, from the transmit/receive mechanism of the server 200 to the input unit 222A via the interface and the transmit/receive unit 223. The input unit 222A transmits the client authentication data with the IP address to the main control unit 222B.

When receiving the data, the main control unit 222B generates the common key. The main control unit 222B transmits the generated common key that is associated with the received IP address to the server first encryption/decryption unit 222E and transmits the server solution generating unit 222C an instruction to generate a new solution. The server solution generating unit 222C generates at least one solution (S2004).

Subsequent processing in the first modification is identical to that of the first embodiment.

<<Second Embodiment>>

A communication system according to a second embodiment will be described below. The configuration and operations of the communication system according to the second embodiment are substantially identical to those of the communication system according to the first embodiment. The communication system of the second embodiment is different from the communication system of the first embodiment as follows: in the first embodiment, the common key originally set in the server 200 is encrypted and provided for the client 100 from the server 200, so that the common key is shared between the server 200 and the client 100, whereas in the second embodiment, a common key originally set in a client 100 is encrypted and provided for a server 200 from the client 100, so that the common key is shared between the server 200 and the client 100.

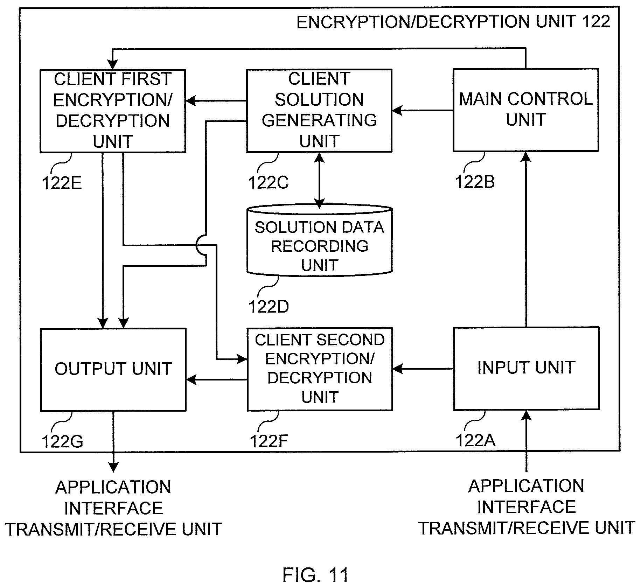

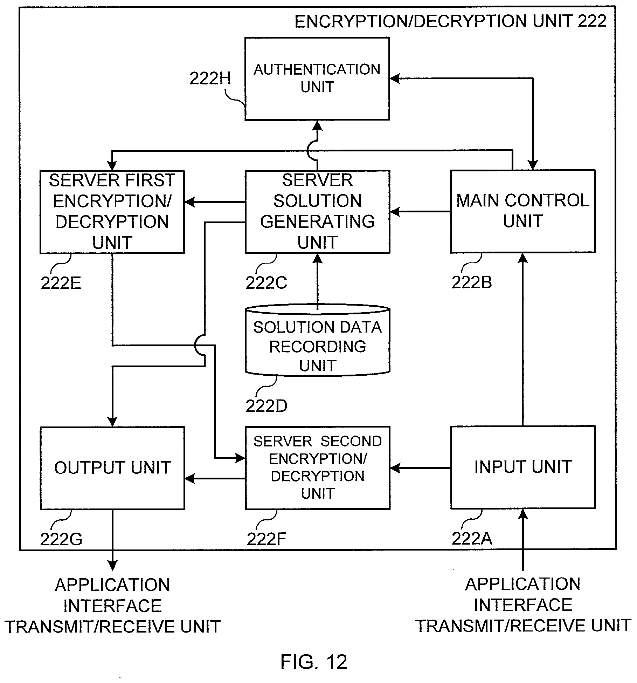

Fig. 11 shows a functional block generated in the client 100 according to the second embodiment. Fig. 12 shows a functional block generated in the server 200 according to the second embodiment.

The functional blocks generated in the client 100 of the first embodiment and the client 100 of the second embodiment are identical to each other. Likewise, the functional blocks generated in the server 200 of the first embodiment and the server 200 of the second embodiment are identical to each other. The functions of the functional block in the client 100 or the server 200 according to the second embodiment may be slightly different from those of the first embodiment. Differences will be discussed later.

The method of use and operations of the communication system according to the second embodiment will be described below.

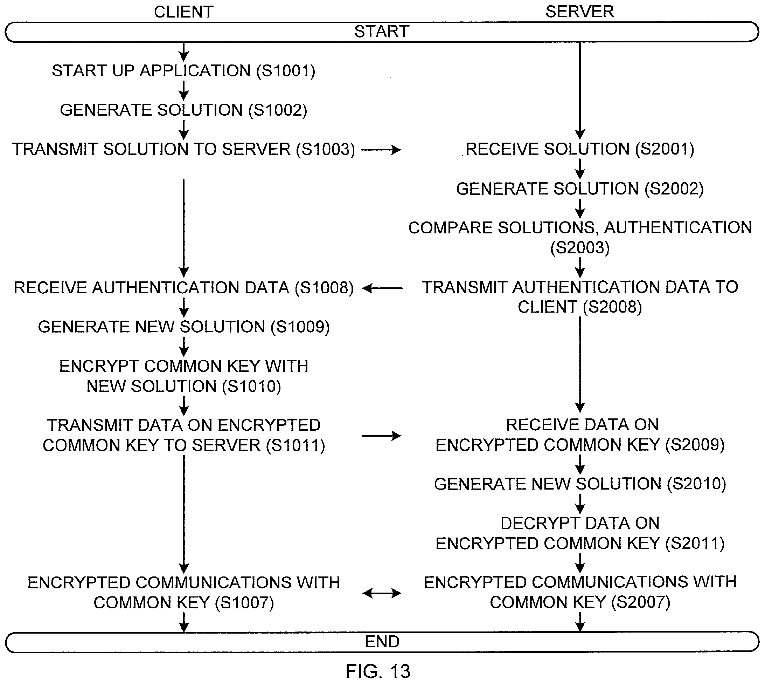

The method performed in the communication system is substantially the same as that of the first embodiment and thus differences will be mainly discussed below (Fig. 13).

First, the processing of S1001 to S1003 performed by the client 100 in the first embodiment and the processing of S2001 to S2003 performed by the server 200 in the first embodiment are identical to the processing in the second embodiment.

Also in the second embodiment, an authentication unit 222H of the server 200 authenticates the client 100 (S2003). The authentication generates authentication data in the second embodiment as in the first embodiment.

In the first embodiment, the authentication data generated by the authentication unit 222H is transmitted to the main control unit 222B, a new solution is generated (S2004), and then the common key is encrypted using the new solution (S2005). However, in the second embodiment, the authentication data generated by the authentication unit 222H is transmitted to the client 100 and the common key is encrypted by the client 100. The detail will be discussed below.

When the authentication data is generated by the authentication unit 222H, the authentication data is transmitted from the authentication unit 222H to a main control unit 222B. The main control unit 222B transmits the authentication data to an output unit 222G. The authentication data being transmitted from the main control unit 222B to the output unit 222G is not subjected to particular processing. Thus, a path for transmitting the authentication data from the main control unit 222B to the output unit 222G is negligible.

When the authentication data is transmitted to the output unit 222G, the output unit 222G transmits the authentication data to a transmit/receive unit 223. The transmit/receive unit 223 optionally generates a header as has been discussed, and then the transmit/receive unit 223 transmits the authentication data with the header to the transmit/receive mechanism of the server 200 via an interface. The transmit/receive mechanism transmits the authentication data to the client 100 via a network 400 (S2008).

The client 100 receives the authentication data (S1008). More specifically, the authentication data is received by the transmit/receive mechanism of the client 100. The authentication data received by the transmit/receive mechanism is transmitted to a transmit/receive unit 123 via an interface 114 and then is transmitted to an input unit 122A of an encryption/decryption unit 122. The input unit 122A transmits the received authentication data to a main control unit 122B.

When receiving the authentication data, the main control unit 122B generates the common key. In the first embodiment, the main control unit 222B of the server 200 has the function of generating the common key, whereas in the second embodiment, the function is shifted to the main control unit 122B of the client 100. Thus, the main control unit 122B of the client 100 may generate the common key when necessary. The main control unit 122B may have an originally fixed common key like the main control unit 222B of the server 200 according to the first embodiment. The main control unit 122B of the present embodiment generates data on the common key when necessary, that is, each time the authentication data is received.

The generated data on the common key is transmitted to a client first encryption/decryption unit 122E. In the meantime, the main control unit 122B sends a client solution generating unit 122C an instruction to generate a new solution. When receiving the instruction, the client solution generating unit 122C generates at least one new solution (S1009). Predetermined one of generated solutions is transmitted from the client solution generating unit 122C to the client first encryption/decryption unit 122E. The solution is used by the client first encryption/decryption unit 122E in the encryption of the common key. Furthermore, which one of the solutions is used for encrypting the common key is determined in advance and information on the solution is shared with a server first encryption/decryption unit 222E of the server 200.

In any case, the client first encryption/decryption unit 122E has the data on the common key and data on the solution generated by the client solution generating unit 122C.

The client first encryption/decryption unit 122E encrypts the data on the common key (S1010). The data on the solution received from the client solution generating unit 122C is used for the encryption. The encryption performed by the client first encryption/decryption unit 122E is similar to the encryption of the common key by the server first encryption/decryption unit 222E according to the first embodiment.

Data on the encrypted common key is transmitted from the client first encryption/decryption unit 122E to an output unit 122G. The data on the encrypted common key is transmitted from the output unit 122G to the transmit/receive unit 123 and then the header is optionally attached to the data. The data on the encrypted common key with the optionally attached header is transmitted from the interface 114 to the transmit/receive mechanism of the client 100 and then is transmitted to the server 200 via the network (S1011).

In the meantime, the client first encryption/decryption unit 122E transmits the plaintext data on the common key to a client second encryption/decryption unit 122F.

The server 200 receives the data on the encrypted common key from the client 100 (S2009). The data on the encrypted common key is received by the transmit/receive mechanism of the server 200. The data on the encrypted common key is transmitted from the transmit/receive mechanism to the transmit/receive unit 223 via the interface and then is transmitted with data on the IP address of the client 100 that is a sender of the common key, from the transmit/receive unit 223 to the main control unit 222B via the input unit 222A.

When receiving the data, the main control unit 222B transmits the data on the encrypted common key to the server first encryption/decryption unit 222E. Moreover, the main control unit 222B transmits the received data on the IP address to a server solution generating unit 222C and sends the server solution generating unit 222C an instruction to generate a new solution.

When receiving the data on the IP address and the instruction, the server solution generating unit 222C reads, from a solution data recording unit 222D, information for generating a new solution associated with the IP address. The server solution generating unit 222C then generates at least one new solution by using the information and transmits the solution to the server first encryption/decryption unit 222E (S2010). As described above, which solution is to be transmitted from data on new solutions to the server first encryption/decryption unit 222E is determined according to conditions shared with the client solution generating unit 122C. Consequently, without the intervention of a malicious third party, the solution transmitted by the client solution generating unit 122C to the client first encryption/decryption unit 122E and the solution transmitted by the server solution generating unit 222C to the server first encryption/decryption unit 222E completely agree with each other.

Thus, the server first encryption/decryption unit 222E has the data on the encrypted common key from the client 100 and the solution generated by the server solution generating unit 222C. The server first encryption/decryption unit 222E decrypts the data on the encrypted common key from the client 100 by using the solution (S2011). The decryption is similar to the processing performed by the client first encryption/decryption unit 122E according to the first embodiment. By using the same solution, the server first encryption/decryption unit 222E can decrypt data encrypted by the client first encryption/decryption unit 122E of the client 100. Moreover, as described above, the solution used for encrypting the common key by the client first encryption/decryption unit 122E and the solution transmitted from the server solution generating unit 222C to the server first encryption/decryption unit 222E agree with each other. Thus, the server first encryption/decryption unit 222E can decrypt the data on the encrypted common key transmitted from the client 100 back into original plaintext data on the common key.

As is evident from the description, the processing performed by the client first encryption/decryption unit 122E and the server first encryption/decryption unit 222E according to the second embodiment is reversed from that of the first embodiment. Thus, contrary to the first embodiment, only encryption is necessary for the client first encryption/decryption unit 122E according to the second embodiment and only decryption is necessary for the server first encryption/decryption unit 222E according to the second embodiment.

The server first encryption/decryption unit 222E transmits the data on the decrypted common key to the server second encryption/decryption unit 222F.

According to the processing, the server second encryption/decryption unit 222F in the server 200 and the client second encryption/decryption unit 122F in the client 100 have the common key that is originally provided in the client 100 in the second embodiment. As in the first embodiment, the solutions for encrypting and decrypting the common key are generated in the client 100 and the server 200, respectively. Since the solutions are not transmitted between the client 100 and the server 200, a third party does not have an opportunity to steal the solutions.

If the server second encryption/decryption unit 222F in the server 200 and the client second encryption/decryption unit 122F in the client 100 have the common key, the server 200 and the client 100 can perform encrypted communications as in the process of (3) describing conventional SSL communications. The processing is identical to that of S1007 and S2007 of the first embodiment.

Also in the communication system of the second embodiment, the server 200 can authenticate the client 100 and the client 100 can authenticate the server 200 as in the first modification of the communication system of the first embodiment.

<<Third Embodiment>>

A third embodiment according to the present invention will be described below. A communication system of the third embodiment corresponds to an invention to be referred to as a third aspect of the present application.

A third invention is substantially identical to the communication system of the first embodiment and includes a client 100 and a server 200 that are connectable to a network 400. The hardware configuration of the client 100 according to the third embodiment and functional blocks generated in the configuration are identical to those of the first embodiment. This holds true also for the server 200.

The method of use and operations of the communication system including the client 100 and the server 200 will be described below.

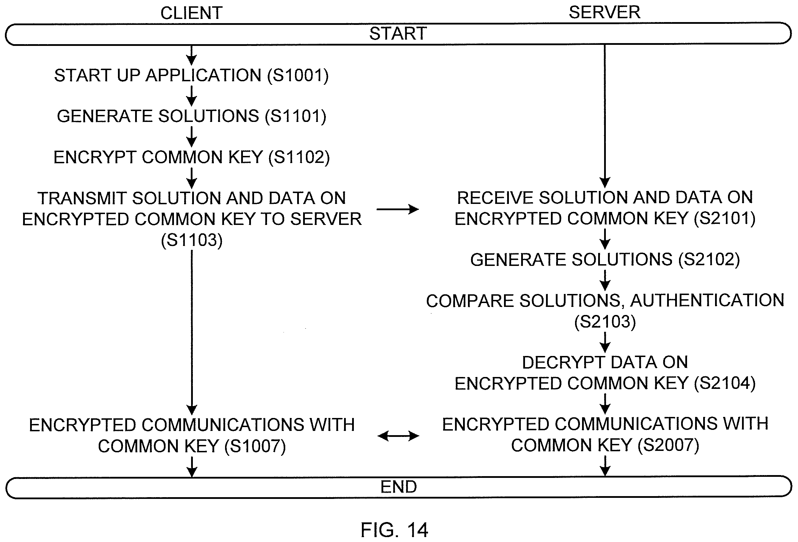

The description mainly refers to Fig. 14.

As in the first embodiment, a user first starts up an application 121 on the client 100 (S1001).

The user attempts to view web sites provided by the server 200. When the user specifies the web address of the server 200 on a browser, a client solution generating unit 122C generates a plurality of solutions (S1102).

The method of generating the solutions is similar to that of the first embodiment. One of the solutions is transmitted to a client first encryption/decryption unit 122E. Moreover, a common key is transmitted from a main control unit 122B to the client first encryption/decryption unit 122E. The client first encryption/decryption unit 122E encrypts the common key (S1102). The solution transmitted from the client solution generating unit 122C is used for the encryption. As in the first embodiment, which one of the solutions is transmitted to the client first encryption/decryption unit 122E, that is, which one of the solutions is used for the encryption is shared with a server first encryption/decryption unit 222E.

In the meantime, the client first encryption/decryption unit 122E transmits the common key, which has not been encrypted, to a client second encryption/decryption unit 122F.

From among the generated solutions, one solution not used for encrypting the common key is transmitted from the client solution generating unit 122C to an output unit 122G. As will be discussed later, the solution is transmitted to the server 200. Which one of the solutions is transmitted to the output unit 122G and the server 200 is determined in advance and information on the solution is shared with the server 200. The encrypted common key is also transmitted from the client first encryption/decryption unit 122E to the output unit 122G.

The solution transmitted to the output unit 122G and data on the encrypted common key are transmitted to the server 200 (S1103). The solution and the data are transmitted in the same way as the first embodiment.

The server 200 receives the solution and data on the encrypted common key from the client 100 (S2101). The solution and the data are received by the server 200 in the same way as the first embodiment.

The solution and the data on the encrypted common key are transmitted from an input unit 222A to a main control unit 222B. The main control unit 222B transmits the solution to an authentication unit 222H and transmits the encrypted common key to the server first encryption/decryption unit 222E. In the meantime, the main control unit 222B sends a server solution generating unit 222C an instruction to generate a solution. Thus, the server solution generating unit 222C generates a plurality of solutions (S2102). As long as at least two solutions are provided before authentication, which will be discussed later, and the decryption of the encrypted common key, the present embodiment is sufficiently implemented. The solutions may be generated when necessary.

Some of the solutions are generated under common conditions (in the same order in the present embodiment) with the solution transmitted from the client 100 to the server 200 and are transmitted from the server solution generating unit 222C to the authentication unit 222H. The authentication unit 222H compares the solution transmitted from the client 100 and the solution transmitted from the server solution generating unit 222C and performs authentication according to the same method as the first embodiment. If the solutions agree with each other, the authentication unit 222H authenticates the client 100 that is a sender of the solution (S2103).

After the authentication, the solution is transmitted from the server solution generating unit 222C to the server first encryption/decryption unit 222E. The server first encryption/decryption unit 222E decrypts the encrypted common key by using the solution transmitted from the server solution generating unit 222C (S2104). The solution transmitted from the server solution generating unit 222C to the server first encryption/decryption unit 222E is generated under the common conditions (in the same order in the present embodiment) with the solution used for encrypting the common key by the client first encryption/decryption unit 122E. Thus, the solution used for encrypting the common key by the client first encryption/decryption unit 122E and a solution used for decrypting the encrypted common key by the server first encryption/decryption unit 222E always agree with each other as long as the client 100 is authorized. This decrypts the key of the encrypted common key according to the same theory as the first embodiment without an interference of a third party. The encrypted common key may be decrypted before the authentication of the client 100. In this case, even if the encrypted common key can be decrypted, the decrypted common key cannot be used when the authentication of the client 100 fails.

The server first encryption/decryption unit 222E transmits the data on the decrypted common key to the server second encryption/decryption unit 222F.

This processing allows the server second encryption/decryption unit 222F in the server 200 and the client second encryption/decryption unit 122F in the client 100 to have the common key.

If the server second encryption/decryption unit 222F in the server 200 and the client second encryption/decryption unit 122F in the client 100 have the common key, the server 200 and the client 100 can safely perform encrypted communications in a common key system as has been discussed in S1007 and S2007 of the first embodiment.

**Claims**

1. A communication method implemented by an encrypted communication system comprising a first communication device and a second communication device, each being connectable to a predetermined network and including solution generating means capable of successively generating identical solutions under common conditions, the method comprising the steps of:

causing the second communication device to generate the solution by the solution generating means and transmit the solution to the first communication device via the network;
causing the first communication device to receive the solution from the second communication device via the network;
causing the first communication device to generate the solution by the solution generating means, compare the solution generated by the solution generating means of the first communication device and the solution received from the second communication device, and authenticate the second communication device if the solutions agree with each other;
if the first communication device authenticates the second communication device, causing the first communication device to generate the second or subsequent solution by the solution generating means and encrypt a common key of the first communication device by using the second or subsequent solution generated under predetermined conditions or causing the second communication device having received notification about the authentication of the second communication device from the first communication device to generate the second or subsequent solution by the solution generating means and encrypt a common key of the second communication device by using the second or subsequent solution generated under the predetermined conditions;

if the first communication device encrypts the common key, transmitting the encrypted common key from the first communication device to the second communication device via the network, and causing the second communication device having received the encrypted common key to generate the second or subsequent solution by the solution generating means and decrypt the encrypted common key by using the second or subsequent solution generated under the predetermined conditions, the common key being decrypted using an algorithm identical to an algorithm for encrypting the common key by the first communication device;

if the second communication device encrypts the common key, transmitting the encrypted common key from the second communication device to the first communication device via the network, and causing the first communication device having received the encrypted common key to generate the second or subsequent solution by the solution generating means and decrypt the encrypted common key by using the second or subsequent solution generated under the predetermined conditions, the common key being decrypted using an algorithm identical to an algorithm for encrypting the common key by the second communication device; and

performing encrypted communications in a common key system between the first communication device and the second communication device by using the common key shared between the first communication device and the second communication device in the above-mentioned steps.

2. A communication method implemented by a second communication device of an encrypted communication system comprising a first communication device and the second communication device, each being connectable to a predetermined network and including solution generating means capable of successively generating identical solutions under common conditions,

wherein the method implemented by the second communication device comprises the steps of:

generating the solution by the solution generating means and transmitting the solution to the first communication device via the network;

receiving an encrypted common key from the first communication device via the network after the first communication device receives the solution from the second communication device via the network, generates the solution by the solution generating means, compares the solution generated by the solution generating means of the first communication device and the solution received from the second communication device, and authenticates the second communication device if the solutions agree with each other, and the first communication device generates, if the first communication device authenticates the second communication device, the second or subsequent solution by the solution generating means and encrypts the common key of the first communication device by using the second or subsequent solution generated under predetermined conditions;

generating the second or subsequent solution by the solution generating means and decrypting the encrypted common key by using the second or subsequent solution generated under the predetermined conditions, the common key being decrypted using an algorithm identical to an algorithm for encrypting the common key by the first communication device; and

performing encrypted communications in a common key system with the first communication device by using the common key shared between the first communication device and the second communication device in the above-mentioned steps.

3. A communication method implemented by a second communication device of an encrypted communication system comprising a first communication device and the second communication device, each being connectable to a predetermined network and including solution generating means capable of successively generating identical solutions under common conditions,

wherein the method implemented by the second communication device comprises the steps of:

generating the solution by the solution generating means and transmitting the solution to the first communication device via the network;

receiving notification about authentication of the second communication device from the first communication device via the network if the first communication device authenticates the second communication device, the first communication device receiving the solution from the second communication device via the network, generating the solution by the solution generating means, comparing the solution generated by the solution generating means of the first communication device and the solution received from the second communication device, and authenticating the second communication device if the solutions agree with each other;

generating, after receiving the notification, the second or subsequent solution by the solution generating means and encrypting a common key of the second communication device by using the second or subsequent solution generated under the predetermined conditions;

transmitting the encrypted common key to the first communication device via the network; and

performing encrypted communications in a common key system with the first communication device by using the common key shared between the first communication device and the second communication device by decrypting the encrypted common key received by the first communication device from the second communication device, the first communication device generating the second or subsequent solution by the solution generating means and decrypting the encrypted common key by using the second or subsequent solution generated under the predetermined conditions, the common key being decrypted using an algorithm identical to an algorithm for encrypting the common key by the second communication device.

4. A communication method implemented by a first communication device of an encrypted communication system comprising the first communication device and a second communication device, each being connectable to a predetermined network and including solution generating means capable of successively generating identical solutions under common conditions,

wherein the method implemented by the first communication device comprises the steps of:

receiving the solution which was generated by the solution generating means of the second communication device and is transmitted via the network;

generating the solution by the solution generating means of the first communication device, comparing the solution generated by the solution generating means of the first communication device and the solution received from the second communication device, and authenticating the second communication device if the solutions agree with each other;

generating, if the first communication device authenticates the second communication device, the second or subsequent solution by the solution generating means and encrypting a common key of the first communication device by using the second or subsequent solution generated under predetermined conditions;

transmitting the encrypted common key from the first communication device to the second communication device via the network; and

performing encrypted communications in a common key system with the second communication device by using the common key shared between the first communication device and the second communication device by decrypting the encrypted common key, the second communication device generating, after receiving the encrypted common key, the second or subsequent solution by the solution generating means and decrypting the encrypted common key by using the second or subsequent solution generated under the predetermined conditions, the common key being decrypted using an algorithm identical to an algorithm for encrypting the common key by the first communication device.

5. A communication method implemented by a first communication device of an encrypted communication system comprising the first communication device and a second communication device, each being connectable to a predetermined network and including solution generating means capable of successively generating identical solutions under common conditions,

wherein the method implemented by the first communication device comprises the steps of:

receiving the solution which was generated by the solution generating means of the second communication device and is transmitted via the network;

generating the solution by the solution generating means of the first communication device, comparing the solution generated by the solution generating means of the first communication device and the solution received from the second communication device, and authenticating the second communication device if the solutions agree with each other;

transmitting notification about authentication of the second communication device to the second communication device via the network if the first communication device authenticates the second communication device;

receiving an encrypted common key that is transmitted from the second communication device via the network after the second communication device having received the notification about the authentication of the second communication device from the first communication device generates the second or subsequent solution by the solution generating means and encrypts the common key of the second communication device by using the second or subsequent solution generated under predetermined conditions;

generating the second or subsequent solution by the solution generating means and decrypting the encrypted common key received from the second communication device by using the second or subsequent solution generated under the predetermined conditions, the common key being decrypted using an algorithm identical to an algorithm for encrypting the common key by the second communication device; and

performing encrypted communications in a common key system with the second communication device by using the common key shared between the first communication device and the second communication device in the above-mentioned steps.

**6.** A second communication device connectable to a predetermined network so as to constitute an encrypted communication system in combination with a first communication device connectable to the network, the first communication device comprising: first communication device solution generating means capable of successively generating solutions, first communication device first encryption/decryption means capable of encryption using the solution generated by the first communication device solution generating means, authentication means, and first communication device second encryption/decryption means capable of encryption and decryption in a common key system using a common key,

the second communication device comprising:

second communication device solution generating means capable of successively generating solutions identical to solutions generated by the first communication device solution generating means under common conditions;
second communication device first encryption/decryption means capable of decryption using the solution generated by the second communication device solution generating means, the decryption being identical to decryption performed by the first communication device first encryption/decryption means if the same solution is used; and
second communication device second encryption/decryption means capable of encryption and decryption in the common key system with the common key,
wherein the solution generated by the second communication device solution generating means is transmitted to the first communication device via the network,
wherein the first communication device receives the solution from the second communication device via the network, generates the solution by means of the first communication device solution generating means, compares the solution generated by the first communication device solution generating means and the solution received from the second communication device, and authenticates the second communication device by means of the authentication unit if the solutions agree with each other, the first communication device solution generating means generates, if the authentication unit authenticates the second communication device, the second or subsequent solution, the first communication device encrypts the common key of the first communication device by means of the first communication device first encryption/decryption means by using the second or subsequent solution generated by the first communication device solution generating means under predetermined conditions, and the first communication device transmits the encrypted common key to the second communication device via the network,
the second communication device generates the second or subsequent solution by means of the second communication device solution generating means and decrypts the encrypted common key received from the first communication device by means of the second communication device first encryption/decryption means by using the second or subsequent solution generated by the second communication device solution generating means under the predetermined conditions, and
by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the first communication device in the common key system.

**7.** A second communication device connectable to a predetermined network so as to constitute an encrypted communication system in combination with a first communication device connectable to the network, the first communication device comprising: first communication device solution generating means capable of successively generating solutions, first communication device first encryption/decryption means capable of decryption using the solution generated by the first communication device solution generating means, authentication means, and first communication device second encryption/decryption means capable of encryption and decryption in a common key system using a common key,

the second communication device comprising:

second communication device solution generating means capable of successively generating solutions identical to solutions generated by the first communication device solution generating means under common conditions;
second communication device first encryption/decryption means capable of encryption using the solution generated by the second communication device solution generating means, the encryption being identical to encryption performed by the first communication device first encryption/decryption means if the same solution is used; and

second communication device second encryption/decryption means capable of encryption and decryption in the common key system with the common key,

wherein the solution generated by the second communication device solution generating means is transmitted to the first communication device via the network,

wherein the first communication device receives the solution from the second communication device via the network, generates the solution by means of the first communication device solution generating means, compares the solution generated by the first communication device solution generating means and the solution received from the second communication device, authenticates the second communication device by means of the authentication unit if the solutions agree with each other, and transmits notification about the authentication of the second communication device to the second communication device via the network if the authentication means authenticates the second communication device,

the second communication device solution generating means of the second communication device having received the notification from the first communication device generates the second or subsequent solution, encrypts the common key of the second communication device by means of the second communication device first encryption/decryption means by using the second or subsequent solution generated under the predetermined conditions, and transmits the encrypted common key to the first communication device via the network,

the first communication device generates the second or subsequent solution by means of the first communication device solution generating means and decrypts the encrypted common key received from the second communication device by means of the first communication device first encryption/decryption means by using the second or subsequent solution generated by the first communication device solution generating means under the predetermined conditions, and

by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the first communication device in the common key system.

8.  A first communication device connectable to a predetermined network so as to constitute an encrypted communication system in combination with a second communication device connectable to the network, the second communication device comprising: second communication device solution generating means capable of successively generating solutions, second communication device first encryption/decryption means capable of decryption using the solution generated by the second communication device solution generating means, and second communication device second encryption/decryption means capable of encryption and decryption in a common key system using a common key, the second communication device transmitting the solution generated by the second communication device solution generating means to the first communication device via the network,

the first communication device comprising:

first communication device solution generating means capable of successively generating solutions identical to solutions generated by the second communication device solution generating means under common conditions;

first communication device first encryption/decryption means capable of encryption using the solution generated by the first communication device solution generating means, the encryption being identical to encryption performed by the second communication device first encryption/decryption means if the same solution is used;

first communication device second encryption/decryption means capable of encryption and decryption in the common key system with the common key; and

authentication means configured to compare the solution generated by the first communication device solution generating means and the solution received from the second communication device and authenticate the second communication device if the solutions agree with each other,

wherein the first communication device solution generating means generates the second or subsequent solution if the authentication means authenticates the second communication device, the common key of the first communication device is encrypted by the first communication device first encryption/decryption means by using the second or subsequent solution generated by the first communication device solution generating means under the predetermined conditions, and the encrypted common key is transmitted to the second communication device via the network,

the second communication device generates the second or subsequent solution by means of the second communication device solution generating means and decrypts the encrypted common key received from the first communication device by means of the second communication device first encryption/decryption means by using the second or subsequent solution generated by the second communication device solution generating means under the predetermined conditions, and

by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the second communication device in the common key system.

9. A first communication device connectable to a predetermined network so as to constitute an encrypted communication system in combination with a second communication device connectable to the network, the second communication device comprising: second communication device solution generating means capable of successively generating solutions, second communication device first encryption/decryption means capable of encryption using the solution generated by the second communication device solution generating means, and second communication device second encryption/decryption means capable of encryption and decryption in a common key system using a common key, the second communication device transmitting the solution generated by the second communication device solution generating means to the first communication device via the network,

the first communication device comprising:

first communication device solution generating means capable of successively generating solutions identical to solutions generated by the second communication device solution generating means under common conditions;

first communication device first encryption/decryption means capable of decryption using the solution generated by the first communication device solution generating means, the decryption being identical to decryption performed by the second communication device first encryption/decryption means if the same solution is used;

first communication device second encryption/decryption means capable of encryption and decryption in the common key system with the common key; and

authentication means configured to compare the solution generated by the first communication device solution generating means and the solution received from the second communication device and authenticate the second communication device if the solutions agree with each other,

wherein notification about authentication of the second communication device is transmitted to the second communication device via the network if the authentication unit authenticates the second communication device, the second communication device generates, when receiving the notification from the first communication device, generates the second or subsequent solution by means of the second communication device solution generating means, encrypts the common key of the second communication device by means of the second communication device first encryption/decryption means by using the second or subsequent solution generated under the predetermined conditions, and transmits the encrypted common key to the first communication device via the network,

the first communication device generates the second or subsequent solution by means of the first communication device solution generating means and decrypts the encrypted common key received from the second communication device by means of the first communication device first encryption/decryption means by using the second or subsequent solution generated by the first communication device solution generating means under the predetermined conditions, and

by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the second communication device in the common key system.

10. A computer program for enabling a computer to act as a second communication device of an encrypted communication system comprising a first communication device and the second communication device, each being connectable to a predetermined network and including solution generating means capable of successively generating identical solutions under common conditions,

the computer program enabling the computer to perform the steps of:

generating the solution by the solution generating means and transmitting the solution to the first communication device via the network;

receiving an encrypted common key from the first communication device via the network after the first communication device receives the solution from the second communication device via the network, generates the solution by the solution generating means, compares the solution generated by the solution generating means of the first communication device and the solution received from the second communication device, and authenticates the second communication device if the solutions agree with each other, and the first communication device generates, if the first communication device authenticates the second communication device, the second or subsequent solution by the solution generating means and encrypts the common key of the first communication device by using the second or subsequent solution generated under predetermined conditions;

generating the second or subsequent solution by the solution generating means and decrypting the encrypted common key by using the second or subsequent solution generated under the predetermined conditions; and

performing encrypted communications in a common key system with the first communication device by using the common key shared between the first communication device and the second communication device in the above-mentioned steps.

11. A computer program for enabling a computer to act as a second communication device of an encrypted communication system comprising a first communication device and the second communication device, each being connectable to a predetermined network and including solution generating means capable of successively generating identical solutions under common conditions,
the computer program enabling the computer to perform the steps of:

generating the solution by the solution generating means and transmitting the solution to the first communication device via the network;

receiving notification about authentication of the second communication device from the first communication device via the network if the first communication device receives the solution from the second communication device via the network, generates the solution by the solution generating means, compares the solution generated by the solution generating means of the first communication device and the solution received from the second communication device, and authenticates the second communication device if the solutions agree with each other;

generating, after receiving the notification, the second or subsequent solution by the solution generating means and encrypting a common key of the second communication device by using the second or subsequent solution generated under predetermined conditions;

transmitting the encrypted common key to the first communication device via the network; and

performing encrypted communications in a common key system with the first communication device by using the common key shared between the first communication device and the second communication device, the first communication device generating the second or subsequent solution by the solution generating means and decrypting the encrypted common key by using the second or subsequent solution generated under the predetermined conditions, the encrypted common key being received by the first communication device from the second communication device.

12. A computer program for enabling a computer to act as a first communication device of an encrypted communication system comprising the first communication device and a second communication device, each being connectable to a predetermined network and including solution generating means capable of successively generating identical solutions under common conditions,
the computer program enabling the computer to perform the steps of:

receiving the solution which was generated by the solution generating means of the second communication device and is transmitted via the network;

generating the solution by the solution generating means of the first communication device, comparing the solution generated by the solution generating means of the first communication device and the solution received from the second communication device, and authenticating the second communication device if the solutions agree with each other;

generating, if the first communication device authenticates the second communication device, the second or subsequent solution by the solution generating means and encrypting a common key of the first communication device by using the second or subsequent solution generated under predetermined conditions;

transmitting the encrypted common key from the first communication device to the second communication device via the network; and

performing encrypted communications in a common key system with the second communication device by using the common key shared between the first communication device and the second communication device, the second communication device generating, after receiving the encrypted common key, the second or subsequent solution by the solution generating means and decrypting the encrypted common key by using the second or subsequent solution generated under the predetermined conditions.

13. A computer program for enabling a computer to act as a first communication device of an encrypted communication system comprising the first communication device and a second communication device, each being connectable to a predetermined network and including solution generating means capable of successively generating identical solutions under common conditions,
the computer program enabling the computer to perform the steps of:

receiving the solution which was generated by the solution generating means of the second communication device and is transmitted via the network;
generating the solution by the solution generating means of the first communication device, comparing the solution generated by the solution generating means of the first communication device and the solution received from the second communication device, and authenticating the second communication device if the solutions agree with each other;
transmitting notification about authentication of the second communication device to the second communication device via the network if the first communication device authenticates the second communication device;
receiving the encrypted common key transmitted from the second communication device via the network, after the second communication device having received the notification about the authentication of the second communication device from the first communication device generates the second or subsequent solution by the solution generating means and encrypts the common key of the second communication device by using the second or subsequent solution generated under predetermined conditions;
generating the second or subsequent solution by the solution generating means and decrypting, after receiving the encrypted common key, the encrypted common key by using the second or subsequent solution generated under the predetermined conditions; and
performing encrypted communications in a common key system with the second communication device by using the common key shared between the first communication device and the second communication device in the above-mentioned steps.

14. A communication method implemented by a second communication device of an encrypted communication system comprising a first communication device and the second communication device, each being connectable to a predetermined network and including solution generating means capable of successively generating identical solutions under common conditions,
wherein the method implemented by the second communication device comprises the steps of:

generating the solutions by the solution generating means and transmitting one of the solutions and a common key of the second communication device to the first communication device via the network after encrypting the common key; and
performing encrypted communications in a common key system with the first communication device by using the common key shared between the first communication device and the second communication device, the first communication device receiving the solution from the second communication device via the network, generating the solutions by the solution generating means, comparing, with the solution received from the second communication device, the solution generated by the solution generating means of the first communication device under the common conditions with the solution generated by the solution generating means of the second communication device and transmitted from the second communication device, authenticating the second communication device if the solutions agree with each other, and decrypting the encrypted common key received by the first communication device from the second communication device, the common key being decrypted using the solution generated by the solution generating means of the first communication device under the common conditions with the solution generated by the solution generating means of the second communication device and used for encrypting the common key to be transmitted from the second communication device, the common key being encrypted using an algorithm identical to an algorithm for encrypting the common key by the second communication device.

15. A communication method implemented by a first communication device of an encrypted communication system comprising the first communication device and a second communication device, each being connectable to a predetermined network and including solution generating means capable of successively generating identical solutions under common conditions,
wherein the method implemented by the first communication device comprises the steps of:

receiving one of the solutions generated by the solution generating means of the second communication device and a common key encrypted by using another one of the solutions which was generated by the solution generating means of the second communication device if the one of the solutions and the common key are transmitted via the network;

generating the solutions by the solution generating means of the first communication device, comparing the solution received from the second communication device with the solution generated by the solution generating means of the first communication device under the common conditions with the solution generated by the solution generating means of the second communication device and transmitted from the second communication device, and authenticating the second communication device if the solutions agree with each other;

decrypting the encrypted common key from the second communication device by using the solution generated by the solution generating means of the first communication device under the common conditions with the solution generated by the solution generating means of the second communication device and used for encrypting the common key to be transmitted from the second communication device, the common key being decrypted using an algorithm identical to an algorithm for encrypting the common key by the second communication device; and

performing encrypted communications in a common key system with the second communication device by using the common key shared between the first communication device and the second communication device in the above-mentioned steps.

16. A second communication device connectable to a predetermined network so as to constitute an encrypted communication system in combination with a first communication device connectable to the network, the first communication device comprising: first communication device solution generating means capable of successively generating solutions, first communication device first encryption/decryption means capable of encryption and decryption using the solution generated by the first communication device solution generating means, authentication means, and first communication device second encryption/decryption means capable of encryption and decryption in a common key system using a common key,

the second communication device comprising:

second communication device solution generating means capable of successively generating solutions identical to solutions generated by the first communication device solution generating means under common conditions;

second communication device first encryption/decryption means capable of encryption and decryption by using the solution generated by the second communication device solution generating means, the encryption and decryption being identical to encryption and decryption performed by the first communication device first encryption/decryption means if the same solution is used; and

second communication device second encryption/decryption means capable of encryption and decryption in the common key system with the common key,

wherein one of the solutions generated by the second communication device solution generating means and the common key encrypted by using another one of the solutions generated by the second communication device solution generating means are transmitted to the first communication device via the network,

the first communication device receives the solution and the encrypted common key from the second communication device via the network, generates the solutions by means of the first communication device solution generating means, compares, with the solution received from the second communication device, the solution generated by the first communication device solution generating means under the common conditions with the solution generated by the second communication device solution generating means and transmitted from the second communication device, authenticates the second communication device by means of the authentication unit if the solutions agree with each other, and decrypts the encrypted common key received from the second communication device, the common key being decrypted using the solution generated by the first communication device solution generating means under the common conditions with the solution generated by the solution generating means of the second communication device and used for encrypting the common key to be transmitted from the second communication device, and

by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the first communication device in the common key system.

17. A first communication device connectable to a predetermined network so as to constitute an encrypted communication system in combination with a second communication device connectable to the network, the second communication device comprising: second communication device solution generating means capable of successively generating solutions, second communication device first encryption/decryption means capable of encryption and decryption using the solution generated by the second communication device solution generating means, and second communication device second encryption/decryption means capable of encryption and decryption in a common key system using a common key,

the first communication device comprising:

first communication device solution generating means capable of successively generating solutions identical to solutions generated by the second communication device solution generating means under common conditions;

first communication device first encryption/decryption means capable of encryption and decryption by using the solution generated by the first communication device solution generating means, the encryption and decryption being identical to encryption and decryption performed by the second communication device first encryption/decryption means if the same solution is used;

first communication device second encryption/decryption means capable of encryption and decryption in the common key system with the common key; and

authentication means configured to compare the solution generated by the first communication device solution generating means with the solution received from the second communication device and authenticate the second communication device if the solutions agree with each other,

wherein if one of the solutions generated by the second communication device solution generating means and the common key encrypted by using another one of the solutions generated by the second communication device solution generating means are transmitted to the first communication device via the network, the second communication device receives the solution and the common key,

the first communication device generates the solutions by means of the first communication device solution generating means, compares, with the solution received from the second communication device, the solution generated by the first communication device solution generating means under the common conditions with the solution generated by the solution generating means of the second communication device and transmitted from the second communication device, authenticates the second communication device by means of the authentication unit if the solutions agree with each other, and decrypts the encrypted common key received from the second communication device, the common key being decrypted using the solution generated by the solution generating means of the first communication device under the common conditions with the solution generated by the solution generating means of the second communication device and used for encrypting the common key to be transmitted from the second communication device, and

by using the common key shared between the first communication device and the second communication device in the above-mentioned steps, the first communication device second encryption/decryption means encrypts and decrypts data to be transmitted and received and the second communication device second encryption/decryption means encrypts and decrypts data to be transmitted and received, enabling encrypted communications with the second communication device in the common key system.

18. A computer program for enabling a computer to act as a second communication device of an encrypted communication system comprising a first communication device and the second communication device, each being connectable to a predetermined network and including solution generating means capable of successively generating identical solutions under common conditions,

the computer program enabling the computer to perform the steps of:

generating the solutions by the solution generating means and transmitting one of the solutions and a common key of the second communication device to the first communication device via the network after encrypting the common key; and

performing encrypted communications in a common key system with the first communication device by using the common key shared between the first communication device and the second communication device, the first communication device receiving the solution from the second communication device via the network, generating the solutions by the solution generating means, comparing, with the solution received from the second communication device, the solution generated by the solution generating means of the first communication device under the common conditions with the solution generated by the solution generating means of the second communication device and transmitted from the second communication device, authenticating the second communication device if the solutions agree with each other, and decrypting the encrypted common key received by the first communication device from the second communication device, the common key being decrypted using the solution generated by the solution generating means of the first communication device under the common conditions with the solution generated by the solution generating means of the second communication device and used for encrypting the common key to be transmitted from the second communication device, the common key being decrypted using an algorithm identical to an algorithm for encrypting the common key by the second communication device.

19. A computer program for enabling a computer to act as a first communication device of an encrypted communication system comprising the first communication device and a second communication device, each being connectable to a predetermined network and including solution generating means capable of successively generating identical solutions under common conditions,
the computer program enabling the computer to perform the steps of:

receiving one of the solutions generated by the solution generating means of the second communication device and a common key encrypted by using another one of the solutions which was generated by the solution generating means of the second communication device if the one of the solutions and the common key are transmitted via the network;
generating the solutions by the solution generating means of the first communication device, comparing the solution received from the second communication device with the solution generated by the solution generating means of the first communication device under the common conditions with the solution generated by the solution generating means of the second communication device and transmitted from the second communication device, and authenticating the second communication device if the solutions agree with each other;
decrypting the encrypted common key received from the second communication device by using the solution generated by the solution generating means of the first communication device under the common conditions with the solution generated by the solution generating means of the second communication device and used for encrypting the common key to be transmitted from the second communication device, the common key being decrypted using an algorithm identical to an algorithm for encrypting the common key by the second communication device; and
performing encrypted communications in a common key system with the second communication device by using the common key shared between the first communication device and the second communication device in the above-mentioned steps.

20. The communication method according to claim 2, wherein the multiple solutions generated by the solution generating means of the first communication device are used by the first communication device in order to perform processing for encrypting the common key of the first communication device, and
the multiple solutions generated by the solution generating means of the second communication device are used by the second communication device in order to perform processing for decrypting the encrypted common key.

21. The communication method according to claim 3, wherein the multiple solutions generated by the solution generating means of the second communication device are used by the second communication device in order to perform processing for encrypting the common key of the second communication device, and
the multiple solutions generated by the solution generating means of the first communication device are used by the first communication device in order to perform processing for decrypting the encrypted common key.

22. The communication method according to claim 4, wherein the multiple solutions generated by the solution generating means of the first communication device are used by the first communication device in order to perform processing for encrypting the common key of the first communication device, and
the multiple solutions generated by the solution generating means of the second communication device are used by the second communication device in order to perform processing for decrypting the encrypted common key.

23. The communication method according to claim 5, wherein the solutions generated by the solution generating means of the second communication device are used by the second communication device in order to perform processing for encrypting the common key of the second communication device, and
the solutions generated by the solution generating means of the first communication device are used by the first communication device in order to perform processing for decrypting the encrypted common key.

24. The computer program according to claim 10, 11, or 18, wherein on the computer constituting the second communication device, encryption and decryption in encrypted communications in the common key system are performed between a TCP/IP and a predetermined application for handling plain text data to be encrypted on the computer, and a plain text to be encrypted and transmitted to the first communication device is generated by the application and is transmitted to the TCP/IP, and encrypted data that is transmitted from the first communication device and is transmitted from the TCP/IP is decrypted into a plain text and then is transmitted to the application.

25. The computer program according to claim 12, 13, or 19, wherein on the computer constituting the first communication device, encryption and decryption in encrypted communications in the common key system are performed between a TCP/IP and a predetermined application for handling plain text data to be encrypted on the computer, and a plain text to be encrypted and transmitted to the first communication device is generated by the application and is transmitted to the TCP/IP, and encrypted data that is transmitted from the second communication device and is transmitted from the TCP/IP is decrypted into a plain text and then is transmitted to the application.

FIG. 1

EP 3 496 328 A1

100

101

102

FIG. 2

111

112

113

CPU

ROM

RAM

116

INTERFACE

114

FIG. 3

123

122

121

| TRANSMIT/ RECEIVE UNIT | ⟷ | ENCRYPTION/ DECRYPTION UNIT | ⟷ | APPLICATION |

INTERFACE

FIG. 4

ENCRYPTION/DECRYPTION UNIT 122

MAIN CONTROL UNIT

122B

INPUT UNIT

122A

APPLICATION INTERFACE TRANSMIT/RECEIVE UNIT

CLIENT SOLUTION GENERATING UNIT

122C

SOLUTION DATA RECORDING UNIT

122D

CLIENT SECOND ENCRYPTION/ DECRYPTION UNIT

122F

CLIENT FIRST ENCRYPTION/ DECRYPTION UNIT

122E

OUTPUT UNIT

122G

APPLICATION INTERFACE TRANSMIT/RECEIVE UNIT

FIG. 5

223
222
221

TRANSMIT/ RECEIVE UNIT — ENCRYPTION/ DECRYPTION UNIT — APPLICATION

INTERFACE

FIG. 6

ENCRYPTION/DECRYPTION UNIT 222

MAIN CONTROL UNIT — 222B

INPUT UNIT — 222A

APPLICATION INTERFACE TRANSMIT/RECEIVE UNIT

AUTHENTICATION UNIT — 222H

SERVER SOLUTION GENERATING UNIT — 222C

SOLUTION DATA RECORDING UNIT — 222D

SERVER SECOND ENCRYPTION/ DECRYPTION UNIT — 222F

SERVER FIRST ENCRYPTION/ DECRYPTION UNIT — 222E

OUTPUT UNIT — 222G

APPLICATION INTERFACE TRANSMIT/RECEIVE UNIT

FIG. 7

CLIENT             SERVER

**START**

START UP APPLICATION (S1001)

GENERATE SOLUTION (S1002)

TRANSMIT SOLUTION TO SERVER (S1003) ⟶ RECEIVE SOLUTION (S2001)

GENERATE SOLUTION (S2002)

COMPARE SOLUTIONS, AUTHENTICATION (S2003)

GENERATE NEW SOLUTION (S2004)

ENCRYPT COMMON KEY WITH NEW SOLUTION (S2005)

RECEIVE DATA ON ENCRYPTED COMMON KEY (S1004) ⟵ TRANSMIT DATA ON ENCRYPTED COMMON KEY TO CLIENT (S2006)

GENERATE NEW SOLUTION (S1005)

DECRYPT DATA ON ENCRYPTED COMMON KEY (S1006)

ENCRYPTED COMMUNICATIONS WITH COMMON KEY (S1007) ⟷ ENCRYPTED COMMUNICATIONS WITH COMMON KEY (S2007)

**END**

FIG. 8

EP 3 496 328 A1

ENCRYPTION/DECRYPTION UNIT 122

AUTHENTICATION
UNIT

122H

CLIENT FIRST
ENCRYPTION/
DECRYPTION
UNIT

CLIENT
SOLUTION
GENERATING
UNIT

MAIN CONTROL
UNIT

122E

122C

122B

SOLUTION DATA
RECORDING
UNIT

122D

OUTPUT UNIT

CLIENT SECOND
ENCRYPTION/
DECRYPTION
UNIT

INPUT UNIT

122G

122F

122A

APPLICATION
INTERFACE
TRANSMIT/RECEIVE UNIT

APPLICATION
INTERFACE
TRANSMIT/RECEIVE UNIT

FIG. 9

EP 3 496 328 A1

CLIENT | SERVER

START

**START UP APPLICATION (S1001)**

**GENERATE SOLUTION (S1002)**

**TRANSMIT SOLUTION TO SERVER (S1003)** → **RECEIVE SOLUTION (S2001)**

**GENERATE SOLUTION (S2002)**

COMPARE SOLUTIONS, AUTHENTICATION (S2003)

**GENERATE NEW SOLUTION (S2003A)**

**RECEIVE SOLUTION (S1003A)** ← **TRANSMIT SOLUTION TO CLIENT (S2003B)**

**GENERATE NEW SOLUTION (S1003B)**

COMPARE SOLUTIONS, AUTHENTICATION (S1003C)

GENERATE CLIENT AUTHENTICATION DATA AND TRANSMIT THE DATA TO SERVER (S1003D) → RECEIVE CLIENT AUTHENTICATION DATA (S2003C)

**GENERATE NEW SOLUTION (S2004)**

ENCRYPT COMMON KEY WITH NEW SOLUTION (S2005)

RECEIVE DATA ON ENCRYPTED COMMON KEY (S1004) ← **TRANSMIT DATA ON ENCRYPTED COMMON KEY TO CLIENT (S2006)**

**GENERATE NEW SOLUTION (S1005)**

DECRYPT DATA ON ENCRYPTED COMMON KEY (S1006)

ENCRYPTED COMMUNICATIONS WITH COMMON KEY (S1007) ↔ ENCRYPTED COMMUNICATIONS WITH COMMON KEY (S2007)

END

FIG. 10

FIG. 11

FIG. 12

SERVER

START

CLIENT

RECEIVE SOLUTION (S2001)

GENERATE SOLUTION (S2002)

COMPARE SOLUTIONS, AUTHENTICATION (S2003)

TRANSMIT AUTHENTICATION DATA TO CLIENT (S2008)

RECEIVE DATA ON ENCRYPTED COMMON KEY (S2009)

GENERATE NEW SOLUTION (S2010)

DECRYPT DATA ON ENCRYPTED COMMON KEY (S2011)

ENCRYPTED COMMUNICATIONS WITH COMMON KEY (S2007)

START UP APPLICATION (S1001)

GENERATE SOLUTION (S1002)

TRANSMIT SOLUTION TO SERVER (S1003)

RECEIVE AUTHENTICATION DATA (S1008)

GENERATE NEW SOLUTION (S1009)

ENCRYPT COMMON KEY WITH NEW SOLUTION (S1010)

TRANSMIT DATA ON ENCRYPTED COMMON KEY TO SERVER (S1011)

ENCRYPTED COMMUNICATIONS WITH COMMON KEY (S1007)

END

FIG. 13

CLIENT SERVER

START

START UP APPLICATION (S1001)

GENERATE SOLUTIONS (S1101)

ENCRYPT COMMON KEY (S1102)

TRANSMIT SOLUTION AND DATA ON
ENCRYPTED COMMON KEY TO SERVER
(S1103)

RECEIVE SOLUTION AND DATA ON
ENCRYPTED COMMON KEY (S2101)

GENERATE SOLUTIONS (S2102)

COMPARE SOLUTIONS, AUTHENTICATION
(S2103)

DECRYPT DATA ON
ENCRYPTED COMMON KEY (S2104)

ENCRYPTED COMMUNICATIONS WITH
COMMON KEY (S1007)

ENCRYPTED COMMUNICATIONS WITH
COMMON KEY (S2007)

END

FIG. 14

## INTERNATIONAL SEARCH REPORT

| International application No. |
| --- |
| PCT/JP2017/028391 |

A. CLASSIFICATION OF SUBJECT MATTER
*H04L9/08*(2006.01)i, *G06F21/44*(2013.01)i, *G09C1/00*(2006.01)i, *H04L9/32*
(2006.01)i

According to International Patent Classification (IPC) or to both national classification and IPC

B. FIELDS SEARCHED

Minimum documentation searched (classification system followed by classification symbols)
H04L9/08, G06F21/44, G09C1/00, H04L9/32

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2009-253650 A  (N-Crypt Lab., Inc.), 29 October 2009 (29.10.2009), paragraphs [0022] to [0046], [0048]; fig. 1 to 5 & US 2011/0305334 A1 paragraphs [0089] to [0204], [0212]; fig. 1 to 5 & US 2015/0067324 A1    & WO 2009/123366 A1 & EP 2267937 A1          & TW 201014312 A | 1–25 |
| Y | JP 2008-234048 A  (Quality Corp.), 02 October 2008 (02.10.2008), paragraphs [0041] to [0056], [0063] to [0081]; fig. 1 to 4 (Family: none) | 1–25 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 October 2017 (04.10.17) | 17 October 2017 (17.10.17) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

| International application No. |
| --- |
| PCT/JP2017/028391 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2003-218866 A  (Communications Research Laboratory), 31 July 2003 (31.07.2003), paragraphs [0063] to [0073]; fig. 2 & US 2003/0145202 A1 paragraphs [0070] to [0080]; fig. 2 & DE 10303074 A | 1-13,24-25 |
| Y | JP 2015-72511 A  (Sakura Information Systems Co., Ltd.), 16 April 2015 (16.04.2015), paragraphs [0050] to [0054] & JP 5555799 B1 | 14-23 |
| A | JP 2015-130633 A  (Panasonic Intellectual Property Management Co., Ltd.), 16 July 2015 (16.07.2015), paragraphs [0036], [0044], [0054] to [0058]; fig. 1, 3 & US 2015/0195280 A1 paragraphs [0051], [0059], [0069] to [0073]; fig. 1, 3 & WO 2015/104765 A1     & EP 3092769 A1 | 1-25 |

Form PCT/ISA/210 (continuation of second sheet) (January 2015)